# EUROPÄISCHE PATENTSCHRIFT

(11) **EP 3 529 012 B1**
(45) Veröffentlichungstag und Bekanntmachung des Hinweises auf die Patenterteilung: **26.05.2021**
(21) Anmeldenummer: 17797533.1
(22) Anmeldetag: 20.10.2017
(51) Int. Cl.: B26D 5/00, G05B 19/418, B25J 9/16, B07C 7/00

(54) **VERFAHREN ZUR DURCHFÜHRUNG EINER SEQUENZ VON BEARBEITUNGSSCHRITTEN ZUR BEARBEITUNG VON WERKSTÜCKEN UND FLACHBETTWERKZEUGMASCHINE**
PROCESS TO EXECUTE A SEQUENCE OF PROCESSING STEPS FOR THE PROCESSING OF WORKPIECES AND FLAT BED MACHINE TOOL
PROCEDE POUR L'EXECUTION D'UNE SEQUENCE D'ETAPES D'USINAGE POUR LE TRAITEMENT DE PIECES ET CENTRE D'USINAGE HORIZONTAL

(30) Priorität: 21.10.2016 DE 102016120132
(43) Veröffentlichungstag der Anmeldung: 28.08.2019
(73) Patentinhaber: Trumpf Werkzeugmaschinen GmbH + Co. KG, 71254 Ditzingen (DE)
(72) Erfinder: KIEFER, Manuel, 74889 Sinsheim (DE); OTTNAD, Jens, 76199 Karlsruhe (DE); WAHL, Eberhard, 73235 Weilheim an der Teck (DE); WEISS, Korbinian, 70825 Korntal (DE); SCHWARZ, Benjamin, 70825 Korntal-Münchingen (DE); SPRINGER, Philipp, 70374 Stuttgart (DE)
(74) Vertreter: Grättinger Möhring von Poschinger Patentanwälte Partnerschaft mbB
(86) Internationale Anmeldenummer: PCT/EP2017/076865
(87) Internationale Veröffentlichungsnummer: WO 2018/073418

(56) Entgegenhaltungen:
- EP-A1- 0 928 641
- WO-A1-2014/028959
- DE-A1-102011 054 360
- US-A- 5 794 789
- US-A1- 2013 249 943
- US-A1- 2013 312 371
- US-A1- 2015 081 090
- US-A1- 2016 154 395

## Beschreibung

Die vorliegende Erfindung betrifft Verfahren zur Durchführung einer Sequenz von Bearbeitungsschritten zur Bearbeitung von Werkstücken, die mit einer Flachbettwerkzeugmaschine, insbesondere einer Laserschneid- oder Stanz-Flachbettwerkzeugmaschine, gemäss einem Bearbeitungsplan erzeugt wurden. Ferner betrifft die Erfindung eine entsprechend ausgebildete Flachbettwerkzeugmaschine.

Beim Absortieren von Teilen an Werkzeugmaschinen, insbesondere von Laserschnittgut oder gestanzten Werkstücken, insbesondere Blechteilen, vergleicht üblicherweise ein Bediener visuell jedes einzelne geschnittene Teil mit einer Auftragszeichnung des jeweiligen Teils. Ein derartig meist Papier-basiertes Absortieren erfordert ein individuelles Suchen eines speziellen fertigen Teils und dessen Zuordnung zum richtigen Auftrag, so dass eine entsprechende Weiterverarbeitung eingeleitet werden kann. Geschnittene oder gestanzte Blechteile werden dabei nach dem Bearbeitungsvorgang häufig in einem Verbund dem jeweiligen nachgelagerten Produktionsschritt zur Verfügung gestellt. Werden insbesondere viele unterschiedliche Teilformen geschnitten, wird der visuelle Vergleich aufwändig und fehleranfällig. So kann eine hohe Teilevielfalt Probleme bei der Teilerkennung und dem nachfolgenden sortierenden Ablegen in z. B. auftragsspezifisch vorgesehenen Werkstücksammelstelleneinheiten hervorrufen. Werden Teile falsch abgelegt, kann ein nachfolgender Prozess negativ beeinträchtigt werden.

Aus der DE 10 2011 054360 A1 ist eine Werkzeugmaschine zur Herstellung von Werkstücken bekannt, bei der ein plattenförmiges Material in Werkstücke getrennt wird. Das Material wird mit Auflagetischen in einen Bearbeitungsbereich transportiert. Zwischen zwei Auflagetischen ist ein Spalt vorgesehen, der zum Beispiel unterhalb eines Bearbeitungskopfes einer Laserbearbeitungsmaschine in seiner Breite einstellbar ist. Der Spalt erlaubt ein Ausschleusen von Werkstücken oder Abfallteilen.

In EP 1 524 063 A1 ist ein Verfahren zur Markierung von Werkstücken offenbart, bei dem eine Platte geschnitten oder gestanzt wird. Dabei projiziert ein Projektor unterschiedliche optische Markierungen auf die geschnittenen bzw. gestanzten Werkstücke. Dieses Verfahren soll dem Bediener das Absortieren der Werkstücke erleichtern, indem es ihm die Werkstücke anzeigt, sowie ein Ablaufsteuerverfahren für die Weiterverarbeitung oder -verwendung solcher geschnittener oder gestanzter Werkstücke angibt. Bei Werkstücken, die sehr klein sind, wie sie in der Blechbearbeitung häufig vorkommen, werden die Markierungen unter Umständen schlecht erkennbar, so dass Bediener zusätzlich auf das Papier-basierte Absortieren zurückgreifen.

Aus dem Bereich der Logistik sind verschiedene Verfahren zur Unterstützung von Arbeitern bekannt. Beispielsweise offenbaren WO 2014/028959 A1 ein Kamera-unterstütztes Verfahren zur Unterstützung eines Arbeiters bei Anlagen zur Manipulation von Waren, EP 1 487 616 B1 ein Verfahren zur automatischen Prozesskontrolle mit einer Arbeitsumgebungserfassung sowie EP 2 161 219 B1 und DE 10 2014 211353 A1 Verfahren der visuellen Unterstützung von manuellen Kommissioniervorgängen. Ferner sind als Beispiel eines digital unterstützten Kommissioniervorgangs sogenannte Pick-by-Light-Implementierungen bekannt. Ferner offenbaren US 5,794,789 A ein integriertes halbautomatisches Sortiersystem, US 2015/081090 A1 ein Materialhandhabungssystem, EP 0 928 641 A1 Vorrichtung zur Unterstützung der Handsortierung von Postartikeln, US 2013/249943 A1 einen Augmented-Reality-Prozess zum Sortieren von Materialien, WO 2014/028959 A1 Verfahren und ein Assistenzsystem zur Unterstützung eines Arbeiters in einer Anlage zur Manipulation von Waren, US 2013/312371 A1 eine Produktaufnahme und -ablage in einem logistischen Umfeld und Systems and US 2016/154395 A1 Verfahren zum Überwachen von Gegenständen in einer Halbleiterfertigungsfabrik

Weiterhin offenbart DE10 2016 104 663 A1 eine Plattenbearbeitungsanlage, mit einem Zuführtisch, einem Entnahmetisch, einer zwischen Zuführtisch und Entnahmetisch angeordneten Bearbeitungseinrichtung, mindestens einer Lichtsignaleinrichtung, welche an einer von einer Bedienperson einsehbaren Stelle angeordnet ist, und eine Steuereinrichtung zum Steuern der Lichtsignaleinrichtung. Es wird vorgeschlagen, dass die Plattenbearbeitungsanlage eine Erfassungseinrichtung umfasst, welche mindestens eine Eigenschaft eines Werkstücks und/oder einer Handhabung eines Werkstücks durch die Bedienperson erfasst und mit der Steuereinrichtung verbunden ist, welche die Lichtsignaleinrichtung abhängig von der erfassten Eigenschaft des Werkstücks und/oder der erfassten Eigenschaft der Handhabung steuert.

Einem Aspekt dieser Offenbarung liegt die Aufgabe zugrunde, die Zuordnung zu erleichtern, Fehler bei der Zuordnung zur reduzieren und/oder die Durchführung sich anschließender Prozesse effizient zu ermöglichen.

Zumindest eine dieser Aufgaben wird gelöst durch ein Verfahren zur Unterstützung einer Sequenz von Bearbeitungsschritten zur Bearbeitung von Werkstücken nach Anspruch 1 und eine Flachbettwerkzeugmaschine nach Anspruch 10. Weiterbildungen sind in den Unteransprüchen angegeben.

In einem Aspekt umfasst eine Werkstücksammelstelleneinheit für eine Werkzeugmaschine, insbesondere für eine Flachbettwerkzeugmaschine wie eine Laserschneid- oder Stanz-Flachbettwerkzeugmaschine, einen Ablegebereich für Werkstücke, die im Rahmen eines Bearbeitungsplans von der Werkzeugmaschine erzeugt wurden, eine Anzeigeeinheit, die dazu ausgebildet ist, Werkstückinformation über die auf dem Ablegebereich abgelegten weiterzuverarbeitenden Werkstücke für einen Bediener anzuzeigen, und eine Signalabgabevorrichtung, die dazu ausgebildet ist, ein Identifikationssignal auszugeben, das einem Bediener den Ort der ausgewählten Werkstücksammelstelleneinheit zum Ablegen des weiterzuverarbeitenden Werkstücks anzeigt.

Ein weiterer hierein offenbarter Aspekt umfasst eine kombinierte Signal-/Anzeigeeinheit. Die kombinierte Signal-/Anzeigeeinheit umfasst eine Anzeigeeinheit, die dazu ausgebildet ist, Werkstückinformation über ein oder mehrere der kombinierte Signal-/Anzeigeeinheit zugeordnete Werkstücke für einen Bediener anzuzeigen. Ferner umfasst die kombinierte Signal-/Anzeigeeinheit eine Signalabgabevorrichtung, die dazu ausgebildet ist, ein Identifikationssignal auszugeben, das einem Bediener den Ort der kombinierten Signal-/Anzeigeeinheit anzeigt, insbesondere zum Ablegen eines der kombinierten Signal-/Anzeigeeinheit zugeordneten Werkstücks. Die kombinierte Signal-/Anzeigeeinheit umfasst ferner eine Kommunikationsschnittstelle zur Anbindung der kombinierten Signal-/Anzeigeeinheit über ein Datenversorgungssystem an ein Steuerungssystem einer Flachbettwerkzeugmaschine oder ein MES einer Flachbettwerkzeugmaschinen-Installation. Alternative kann das Datenversorgungssystem in die kombinierte Signal-/Anzeigeeinheit integriert werden.

In einigen Ausführungsformen der Werkstücksammelstelleneinheit (bzw. der kombinierten Signal-/Anzeigeeinheit) sind die Anzeigeeinheit und/oder die Signalvorrichtung dazu ausgebildet, sich mit einer Steuerungseinheit der Werkzeugmaschine zum Datenaustausch zu verbinden, um Information, insbesondere über die abgelegten Werkstücke, zu empfangen, insbesondere abzufragen, und für einen Bediener auszugeben. Insbesondere kann die Anzeigeeinheit dazu ausgebildet sein, die Werkstückinformation menschenlesbar und/oder maschinenlesbar anzuzeigen. Die Werkstückinformation umfasst insbesondere Information über die Anzahl der abzulegenden Werkstücke, einen nachfolgenden Bearbeitungsschritt und/oder einen zugrundeliegenden Auftrag. Die Anzeigeeinheit ist beispielsweise eine E-Ink-Anzeige und/oder ist als eine Einheit mit der Signalvorrichtung ausbildet. Ferner kann die Signalvorrichtung eine Lichtquelle, wie eine LED-basierte Lichtquelle, und optional eine akustische Signalquelle umfassen.

In einigen Ausführungsformen umfasst die Werkstücksammelstelleneinheit ein strukturelles Element, insbesondere einen Sammelbehälter, ein Gehäuse, eine Palette, einen Wagen oder allgemein ein eine Auflagefläche aufweisendes Bodenelement. Ferner können die Anzeigeeinheit und/oder die Signalvorrichtung, insbesondere eine Einheit aus Anzeigeeinheit und Signalvorrichtung, insbesondere lösbar an dem strukturellen Element der Werkstücksammelstelleneinheit angebracht sein.

In einigen Ausführungsformen kann die Werkstücksammelstelleneinheit ferner ein Füllstandserfassungssystem zum Überwachen der Anzahl der in der Werkstücksammelstelleneinheit abgelegten Werkstücke und/oder eine Eingabevorrichtung oder eine Schnittstelle zu einer externen Eingabevorrichtung und/oder ein Nahfeldüberwachungssystem zum Datenaustausch bezüglich Ortsinformation der Werkstücksammelstelleneinheit und/oder Ortsinformation eines sich in der Nähe befindenden, beispielsweise an einer Hand oder an einer externen Eingabevorrichtung vorgesehenen, Senders umfassen. Entsprechend kann auch die kombinierte Signal-/Anzeigeeinheit weitergebildet sein.

In einem weiteren Aspekt ist die Werkstücksammelstelleneinheit (bzw. die kombinierte Signal-/Anzeigeeinheit) Teil einer Flachbettwerkzeugmaschinen-Installation, insbesondere eine Anlage mit einer oder mehreren Laserschneid- oder Stanz-Flachbettwerkzeugmaschinen. Die Flachbettwerkzeugmaschine kann dabei eine Bearbeitungseinheit, insbesondere einer Laserschneid- oder Stanz-Bearbeitungseinheit, eine Steuerungseinheit, in der ein Bearbeitungsplan abgelegt ist, zur Ansteuerung der Bearbeitungseinheit zur Erzeugung von räumlich gemäß einem Bearbeitungsbilddatensatz nebeneinander angeordneten Werkstücken, und einen Sortiertisch zum Bereitstellen der angeordneten Werkstücke zum Absortieren nach erfolgter Herstellung umfassen.

In einem weiteren Aspekt umfasst ein Kommunikationssystem einer Flachbettwerkzeugmaschinen-Installation zur Ausbildung einer intelligenten Fabrik mindestens eine Flachbettwerkzeugmaschine mit einer Steuerungseinheit zur Ansteuerung einer Werkstückerzeugung gemäß vorgegebenen Bearbeitungsplänen und ein Manufacturing Execution System, in das die Steuerungseinheit eingebunden ist und das Auftragsinformation bzgl. der Bearbeitungspläne verwaltet, wobei die Auftragsinformation Werkstückinformation umfasst. Ferner umfasst das Kommunikationssystem eine Mehrzahl von kombinierten Signal-/Anzeigeeinheiten und/oder Werkstücksammelstelleneinheiten. Die kombinierten Signal-/Anzeigeeinheiten weisen jeweils eine Anzeigeeinheit und eine Signalabgabevorrichtung auf, wobei die Anzeigeeinheit dazu ausgebildet ist, die Werkstückinformation über ein oder mehrere der kombinierte Signal-/Anzeigeeinheit zugeordnete Werkstücke für einen Bediener anzuzeigen, und die Signalabgabevorrichtung dazu ausgebildet ist, ein Identifikationssignal auszugeben, das einem Bediener den Ort der kombinierten Signal-/Anzeigeeinheit anzeigt. Die Werkstücksammelstelleneinheiten umfassen entsprechende Signalabgabevorrichtungen und Anzeigeeinheiten, wie zuvor zusammengefasst.

Ein weiterer Aspekt betrifft ein Nachrüstverfahren zum Nachrüsten einer Flachbettwerkzeugmaschinen-Installation zur Ausbildung einer intelligenten Fabrik basierend auf einem Manufacturing Execution System. Das Verfahren umfasst den Schritt des Bereitstellens einer Mehrzahl von kombinierten Signal-/Anzeigeeinheiten und/oder Werkstücksammelstelleneinheiten. Die kombinierten Signal-/Anzeigeeinheiten weisen jeweils eine Anzeigeeinheit und eine Signalabgabevorrichtung auf, wobei die Anzeigeeinheit dazu ausgebildet ist, die Werkstückinformation über ein oder mehrere der kombinierte Signal-/Anzeigeeinheit zugeordnete Werkstücke für einen Bediener anzuzeigen, und die Signalabgabevorrichtung dazu ausgebildet ist, ein Identifikationssignal auszugeben, das einem Bediener den Ort der kombinierten Signal-/Anzeigeeinheit anzeigt. Die Werkstücksammelstelleneinheiten umfassen entsprechende Signalabgabevorrichtungen und Anzeigeeinheiten, wie zuvor zusammengefasst. Ferner umfasst das Verfahren den Schritt des Einbindens der bereitgestellten Mehrzahl von kombinierten Signal-/Anzeigeeinheiten und/oder Werkstücksammelstelleneinheiten in das Manufacturing Execution System.

In einer Weiterbildung des Nachrüstverfahrens wird eine Flachbettwerkzeugmaschine ferner mit einer Kamera (oder einem Kamerasystem bestehend aus mehreren Kameras) nachgerüstet, die zur Ausgabe von Bildinformation eines Sortiertischs für eine Bildverarbeitung zur Teilerkennung in das Manufacturing Execution System eingebunden wird.

Ein weiterer Aspekt betrifft ein Verfahren zur Unterstützung einer Sequenz von Bearbeitungsschritten zur Bearbeitung von Werkstücken, die mit einer Flachbettwerkzeugmaschine, insbesondere einer Laserschneid- oder Stanz-Flachbettwerkzeugmaschine, gemäß einem Bearbeitungsplan erzeugt wurden, wobei Werkstücksammelstelleneinheiten zum Sammeln von Werkstücken eingesetzt werden und mindestens eine der Werkstücksammelstelleneinheiten eine Signalvorrichtung und eine Anzeigeeinheit aufweist. Das Verfahren umfasst die Schritte:
Abgleichen des Bearbeitungsplans mit einem Absortierbilddatensatz, der durch ein bildgebendes Erfassen der Werkstücke erzeugt wurde, wobei ein Sortiersignal erzeugt wird, das Information über ein weiterzuverarbeitendes Werkstück umfasst,
Auswählen einer der Werkstücksammelstelleneinheiten, die dem Sortiersignal zugeordnet ist,
Ansteuern der Signalvorrichtung der ausgewählten Werkstücksammelstelleneinheit zur Ausgabe eines Identifikationssignals, das einem Bediener den Ort der ausgewählten Werkstücksammelstelleneinheit zum Ablegen des weiterzuverarbeitenden Werkstücks anzeigt,
Übermitteln von Werkstückinformation, die sich aus dem Sortiersignal über das weiterzuverarbeitende Werkstück ergibt, an die ausgewählte Werkstücksammelstelleneinheit, und
Anzeigen der Werkstückinformation auf der Anzeigeeinheit der ausgewählten Werkstücksammelstelleneinheit.

In einigen Ausführungsformen des Verfahrens zur Unterstützung einer Sequenz von Bearbeitungsschritten wird eine Ansteuerung der Signalvorrichtung und/oder der Anzeigeeinheit unter weiteren, insbesondere im Rahmen der Figurenbeschreibung beschriebenen Bedingungen vorgenommen.

Ferner kann das Verfahren zur Unterstützung einer Sequenz von Bearbeitungsschritten in Verfahren zur Unterstützung eines Absortiervorgangs von auf einem Sortiertisch angeordneten Werkstücken, die mit der Flachbettwerkzeugmaschine gemäß einem Bearbeitungsplan erzeugt wurden, mitwirken. Derartige Verfahren umfassen unter anderem ein Bereitstellen eines Bearbeitungsbilddatensatzes des Bearbeitungsplans, der der Anordnung von mindestens einem Werkstück zugrunde lag, ein bildgebendes Erfassen des Sortiertischs mit einer Mehrzahl von räumlich nebeneinander angeordneten Werkstücken und Erzeugen eines ersten Absortierbilddatensatzes, ein wiederholtes bildgebendes Erfassen des Sortiertischs und Erzeugen eines zweiten Absortierbilddatensatzes, nachdem mindestens ein Werkstück der Mehrzahl von räumlich nebeneinander angeordneten Werkstücken vom Sortiertisch entnommen wurde, und ein Abgleichen des ersten Absortierbilddatensatzes und des zweiten Absortierbilddatensatzes unter Einbezug des Bearbeitungsbilddatensatzes, wobei ein Sortiersignal erzeugt wird, das Information, die den Typ, die Lage und/oder die Form des mindestens einen entnommenen Werkstücks umfasst, enthält.

In einigen Weiterbildungen kann das Verfahren zur Unterstützung eines Absortiervorgangs einen oder mehrere der folgenden Schritte umfassen:
Ausgeben eines Ablegesignals in Abhängigkeit des Sortiersignals zur Unterstützung der Zuordnung des entnommenen Werkstücks durch einen Bediener zu einem nachfolgenden Bearbeitungsschritt, insbesondere zum Ablegen des entnommenen Werkstücks an einer Werkstücksammelstelleneinheit,
Überwachen eines von einem Bediener durchgeführten Ablegevorgangs des entnommenen Werkstücks, wobei das Überwachen eines Ablegevorgangs beispielsweise eine Gewichtsüberwachung einer spezifischen Werkstücksammelstelle und/oder eine Überwachung einer Bewegungstrajektorie oder Bewegungsteiltrajektorie des entnommenen Werkstücks oder eines die Bewegung bewirkenden Objekts umfasst,
Ausgeben eines Sortiervorgangsvollendungssignals, wenn der Ablegevorgang einem dem Sortiersignal zugeordneten Ablegevorgang entspricht, und optional Aktualisieren einer Werkstücksammelstellen-spezifischen Anzeige bzgl. der Ablage des entnommenen Werkstücks,
Ausgeben eines Fehlersignals, wenn der Ablegevorgang von einem dem Sortiersignal zugeordneten Ablegevorgang abweicht, und optional Anzeigen von Information bezüglich des dem Sortiersignal zugeordneten Ablegevorgangs,
Überwachen eines Ablegevorgangs mindestens eines entnommenen Werkstücks in einer Ausschusssammelstelle durch einen Bediener, und Zuordnen des mindestens einen entnommenen Werkstücks als Ausschussstück und optional Aufnehmen des Ausschussstücks in einer Fehlteilliste,
Ausgeben eines Ergänzungsproduktionssignals an ein Produktionsleitsystem,
Abgleichen von Produktionsparametern des entnommenen Werkstücks mit einem nachfolgenden Bearbeitungsplan, und bei Übereinstimmung der Produktionsparameter mit dem nachfolgenden Bearbeitungsplan und einer Verfügbarkeit bezüglich des entnommenen Werkstücks, Ergänzen des nachfolgenden Bearbeitungsplans mit einem Erzeugungsschritt zur Erzeugung eines Ersatzwerkstücks für das Ausschussstück,
eine Bildverarbeitung zur Erkennung der Form eines entnommenen Werkstücks oder der Form der leer zurückgebliebenen Stelle auf dem Sortiertisch und/oder eine Bildverarbeitung für einen Vergleich der erkannten Form mit einer im Bearbeitungsprogramm hinterlegten Form, zum Beispiel als Teil des Schritts des Abgleichens des ersten Absortierbilddatensatzes und des zweiten Absortierbilddatensatzes,
ein optisches Erfassen von optischen Bildsignalen im sichtbaren und/oder infraroten Wellenlängenbereich und/oder ein Schallwellen-basiertes Erfassen von Ultraschall-Bildsignalen und ein Verarbeiten der erfassten optischen Bildsignale und/oder UltraschallSignale zu dem ersten Absortierbilddatensatz bzw. dem zweiten Absortierbilddatensatz, zum Beispiel als Teil des Schritts des bildgebenden Erfassens des Sortiertischs.

Allgemein können die hierin offenbarten einzelnen Verfahrensschritte mit einer Bearbeitungszeit, insbesondere teilweise parallel, derart schnell verarbeitet werden, dass z. B. das erzeugte Sortiersignal in weniger als 0,5 s, insbesondere in weniger als 0,2 s, insbesondere in weniger als 0,1 s nach der Entnahme des Werkstücks erzeugt wird. Allgemein kann das Sortiersignal Untersignale umfassen, die jeweils einem entnommenen Werkstück zugeordnet sind, wenn z. B. mehrere Werkstücke erfasst werden. Ferner können allgemein Signale als Information auf einer Datenbrille eines Bedieners und/oder einem Überwachungsmonitor eines Steuerungssystems und/oder als Blinksignale ausgegeben werden.

Ferner kann die Umsetzung des Verfahrens in Zusammenhang mit Flachbettwerkzeugmaschinen, insbesondere Laserschneid- oder Stanz-Flachbettwerkzeugmaschinen, erfolgen, die eine Bearbeitungseinheit, insbesondere eine Laserschneid- oder Stanz-Bearbeitungseinheit, und eine Steuerungseinheit, in der ein Bearbeitungsplan abgelegt ist, zur Ansteuerung der Bearbeitungseinheit zur Erzeugung von räumlich gemäß einem Bearbeitungsbilddatensatz nebeneinander angeordneten Werkstücken, aufweisen. Ferner kann die Flachbettwerkzeugmaschine einen Sortiertisch zum Bereitstellen der angeordneten Werkstücke zum Absortieren, insbesondere durch den Bediener, nach erfolgter Herstellung, und eine Erfassungseinheit zum bildgebenden Erfassen des Sortiertischs mit einer Mehrzahl von räumlich nebeneinander angeordneten Werkstücken und Erzeugen von mindestens einem ersten Absortierbilddatensatz zu einem ersten Zeitpunkt und einem zweiten Absortierbilddatensatz zu einem zweiten nachfolgenden Zeitpunkt umfassen. In einigen Weiterbildungen der Flachbettwerkzeugmaschine ist die Erfassungseinheit zum optischen Erfassen von Bildsignalen im sichtbaren und/oder infraroten Wellenlängenbereich und/oder zum Schallwellen-basierten Erfassen von Ultraschall-Bildsignalen ausgebildet und umfasst entsprechende Sensoren.

Die Erfinder haben insbesondere erkannt, dass die hierin offenbarten Konzepte und deren Anwendung in den hierin beschriebenen Vorrichtungen insbesondere für spiegelnde oder teildurchsichtige Werkstücke geeignet sind und Vorteile beim Absortieren bereitstellen können. Spiegelnde oder teildurchsichtige Werkstücke umfassen z. B. Werkstücke aus Blech, Glas, Halbleitersubstrat-Strukturen, Leiterplatten-Strukturen und Kunststoffteile, wobei die Materialien selbst, und insbesondere deren Oberflächeneigenschaften, Licht transmittieren oder zumindest teilweise reflektieren können. Insbesondere bei derartigen Werkstücken wurde erkannt, dass z. B. die Erkennbarkeit von projizierten Markierungen auch bei größeren Werkstücken oft unzureichend sein kann und dadurch Bediener zusätzlich auf das Papier-basierte Absortieren zurückgreifen. Die hierin offenbarten Konzepte können dagegen gerade auch für derartige Werkstücke die Effizienz beim Absortieren steigern.

Ferner hat sich gezeigt, dass die hierin offenbarten Konzepte und deren Anwendung in den hierin beschriebenen Vorrichtungen den zusätzlichen Nutzen für den Bediener aufweisen können, dass dieser nicht an ein vorgegebenes Ablaufsteuerverfahren gebunden ist, nach welchem er die Teile abzusortieren hat. So haben Versuche mit unterschiedlichen Bedienern beim Absortieren mit und ohne Einsatz der hierin offenbarten Konzepte überraschenderweise ergeben, dass ein Absortieren meist dann schneller und effizienter erfolgt, wenn ein Bediener in der Reihenfolge des Abortierens seinem eigenen Plan nachgehen kann und nicht an eine externe Vorgabe gebunden wird. Dies beruht unter anderem evtl. auf den spezifischen Umständen beim Absortieren von Werkstücken, die mit Flachbettwerkzeugmaschinen erstellt werden. Derartig erzeugte Werkstücke kommen zusammen mit dem Schnittabfall, der z. B. in Form eines Restgitters ausgestaltet ist, auf dem Sortiertisch an. Aufgrund des Trennvorgangs können die Werkstücke oftmals noch mit dem Schnittabfall (dem Restgitter) durch winzige Restverbindungen (sogenannte Microjoints) verbunden sein. Bei Absortieren trennt der Bediener nun die Werkstücke erst vom Restgitter ab und sortiert sie dann auf Werkstück-spezifische Ablagen. Wenn einzelne Werkstücke nicht mehr ganz fest an ihrem vorgegeben Platz auf dem Sortiertisch liegen, bzw. noch mit dem Restgitter verbunden sind und so z. B. schon schräg im Restgitter hängen, kann es für den Bediener vorteilhaft sein, diese zuerst abzusortieren. Dieses Vorgehen gilt insbesondere für biegefeste Werkstücke, so dass die hierin offenbarten Konzepte und deren Anwendung in den hierin beschriebenen Vorrichtungen auch besonders geeignet für das Absortieren von biegefesten Werkstücken sein können. Ein biegefestes Werkstück kann beispielsweise aus Blech, Glas oder Kunststoff sein. Ferner sind aus einem Halbleitersubstrat oder einer Leiterplatte geschnittene (oder gestanzte) Teile oft biegefest.

Allgemein kann eine Flachbettwerkzeugmaschine eine Laserschneid- oder Stanz-Flachbettwerkzeugmaschine sein, die nur mittels Laser trennt oder die nur mittels Stanzen trennt. Ferner kann eine Flachbettwerkzeugmaschine eine Kombinationsmaschine sein, die beide Trennverfahren umsetzt. Auf der Flachbettwerkzeugmaschine können auch weitere Verarbeitungsschritte wie z.B. Entgraten, Biegen, Falzen, Schweißen, Bohren, Gewindeschneiden, etc. ausgeführt werden.

Allgemein werden die Werkstücke aus z. B. Blech, Glas, Halbleitersubstrat-Strukturen, Leiterplatten-Strukturen und Kunststoffteilen erzeugt. Die zugrundeliegenden Materialien weisen Eigenschaften auf, die eine Bildgebung mit den jeweilig einzusetzenden bildgebenden Verfahren ermöglichen. Hinsichtlich einer optischen Bildgebung können die Materialeigenschaften der Werkstücke, und insbesondere deren Oberflächeneigenschaften, Licht im sichtbaren und/oder infraroten Wellenlängenbereich auch z. B. zumindest teilweise transmittieren oder zumindest teilweise reflektieren, ohne dass die Bilddatenerfassung wesentlich beeinflusst wird. Ferner weisen die Materialien meist eine harte, insbesondere schall- und ultraschallreflektierende, Oberfläche auf, was insbesondere auch eine Ultraschall-basierte Bilddatenerfassung ermöglicht. Die angesprochenen Laserschneid- oder Stanz-Flachbettwerkzeugmaschinen werden ferner üblicherweise zur Erzeugung von Werkstücken aus einem festen Material eingesetzt, das eine Biegefestigkeit (Steifigkeit) aufweist, die zu keiner wesentlichen Verformung beim schnellen manuellen Absortieren führt.

Ferner sind die hierin offenbarten Konzepte und deren Anwendung in den hierin beschriebenen Vorrichtungen auf das Bereitstellen von unterstützender Information möglichst in Echtzeit ausgelegt. Die zeitnahe Bereitstellung ist wesentlich, da der Absortiervorgang, dessen zeitlicher Ablauf vom Fluss und der Geschwindigkeit der manuellen Vorgänge des Bedieners bestimmt wird, gerade möglichst nicht (durch z. B. Warten auf ein Sortiersignal) verlangsamt werden soll oder zumindest zeitnah eine Rückkopplung über erfolgte Tätigkeiten (z. B. der richtig oder falsch erfolgten Zuordnung zu einer Sammelstelle) gegeben werden soll. Somit ist beispielsweise eine korrekte Durchführung der Buchungen der verschiedenen Sortiervorgänge in Echtzeit wesentlich für die Implementierung der hierin offenbarten Konzepte im Rahmen einer intelligenten Fabrik. Nur bei einer zeitnahen Erkennung kann das System vernünftige Vorschläge erstellen und dem Bediener zugänglich machen. Die vorgeschlagene Absortierunterstützung führt dazu die wichtigen Schritte wie Bildgebung, Abgleich und Verbuchungen im MES z. B. automatisch im Hintergrund aus. Allgemein werden die Komponenten und Systemstrukturen derart ausgelegt, dass die einzelnen Verfahrensschritte mit einer kurzen Bearbeitungszeit, insbesondere teilweise parallel, verarbeitet werden. Bevorzugt wird das Sortiersignal z. B. in weniger als 0,5 s, insbesondere in weniger als 0,2 s, und insbesondere ferner in weniger als 0,1 s nach der Entnahme des Werkstücks erzeugt.

In einigen Ausführungsformen wird einem Bediener beim Aufnehmen eines z. B. geschnittenen Teils angezeigt, in welche Kiste (als Beispiel einer Werkstücksammelstelleneinheit) dieses zu legen ist. Die Anzeige kann insbesondere optisch erfolgen. Denkbar ist aber z. B. auch eine akustische Anzeige bzw. akustische Unterstützung einer optischen Anzeige. Dabei kann gleichzeitig automatisch eine spezifische Teilzugehörigkeit im übergeordneten System verbucht werden, sobald die Ablage erfolgte. Bei fehlenden Teilen, z. B. aufgrund von Ausschuss oder Maschinenfehlfunktionen, kann eine Nachproduktion direkt über eine Schnittstelle zu einem Produktionsleitsystem (Manufacturing Execution System: MES) initiiert werden. Das Produktionsleitsystem ist Teil eines vielschichtigen Managementsystems zur Überwachung und Durchführung einer zumindest teilautomatisierten Produktion. Es ist z. B. in die Ausführung, Steuerung oder Kontrolle der Produktion, insbesondere einzelner Produktionsschritte, in Echtzeit eingebunden.

Das Werkzeugmaschinensystem kann für die Ausführung einiger der hierin offenbarten Konzepte eine Kamera (oder ein Kamerasystem bestehend aus mehreren Kameras) umfassen, um den gesamten interessierenden Raum erfassen zu können.. Die eine oder mehrere Kameras können beispielsweise festinstalliert am Maschinengehäuse Bildinformation des Sortiertischs einer Flachbett- oder Stanz-Laserschneidmaschine liefern. Nach Kalibrierung der Kamera auf die Blechoberfläche/den Sortiertisch kann bei den hierin offenbarten Verfahren eine Bildverarbeitungsalgorithmik zur Teilerkennung eingesetzt werden. In das Verfahren zur Unterstützung eines Absortiervorgangs integrierte Kameras erlauben es somit, z. B. mittels Bildverarbeitung ein jeweils vom Bediener gegriffenes Teil, z. B. anhand seiner Form und/oder Lage auf dem Sortiertisch, zu identifizieren. Die Bildverarbeitungsalgorithmik kann insbesondere auf die Auftragsinformation zugreifen und somit eine Identifizierung der Teile erleichtern. Ferner kann mittels Laser bzw. Markierlaser z. B. ein QR-Code oder eine Materialnummer während der Bearbeitung eingraviert werden. Mithilfe der Kamera kann diese Codierung ausgelesen und anschließend zur Identifikation und Absortierunterstützung eingesetzt werden. Alternativ oder ergänzend kann ein Bediener eine Datenbrille einsetzen, welche ergänzende Bildinformation für die Teilerkennung liefern kann und bei der zusätzlich zum real erfassten Bild der Umgebung weitere Informationen, beispielsweise der QR-Code oder eine Materialnummer, innerhalb des Sichtbereiches eingeblendet werden Die genannten Ausführungsformen sind nicht Gegenstand der Erfindung.

Erfindungsgemäss wird bei der Bildverarbeitung der Flachbettwerkzeugmaschine bei der Bildverarbeitung die Lage einer Veränderung im Differenzbild ermittelt. Da eine Diferenzbild-basierte Analyse im Vergleich zu einem z. B. klassischen Pattern-Matching weniger durch Varianz von Oberflächen, Lichteinfall, Perspektive etc. gestört wird, kann eine höhere System-Toleranz erreicht werden. Allgemein kann somit vorteilhaft auf ein klassisches Pattern-Matching zur Werkstückidentifikation verzichten werden, da insbesondere beim Formbasierten Matching schon kleine Abweichungen eine Wiedererkennung von Bauteilen erschweren können. Gerade bei Beobachtung der Szene aus seitlicher Perspektive wäre ein derartiger klassischer Bildverarbeitungansatz erschwert, weshalb wohl derartige Ansetze bisher auch noch keine Umsetzung insbesondere bei Flachbettwerkzeugmaschinen fanden. Dagegen werden mit dem hierin offenbarten Konzepten derartige Probleme gelöst.

In einigen Weiterbildungen der Bildverarbeitung kann zusätzlich eine vor oder während dem Bearbeitungsvorgang erfolgte Veränderung der Absolutlage der Tafelgeometrie berücksichtigt werden. Dies kann beispielsweise durch von der Steuerungseinheit/dem MES bereitgestellter Information zu einer beispielsweise Nullpunktverschiebung und/oder Koordinatentransformation erfolgen, die dann die zur Anpassung der tatsächlichen Lage des Rohmaterials im Arbeitsraum in die Bildverarbeitung einfließt.

Das übergeordnete Absortiersystem kann aufgrund des Abgleichs der durch die Bilderfassung und Auswertung gewonnenen Information mit der Auftragsinformation die Werkstückerkennung unterstützen und z. B. die vorgesehene Ablage identifizieren. Z. B. wird dem Bediener über die Datenbrille die Ablage sichtbar gekennzeichnet und der Bediener erhält eine Rückmeldung, ob das Teil korrekt abgelegt wurde.

Mit der Kamera und insbesondere dem Abgleich der erfassten Bildinformation mit Schnittanweisungen des Bearbeitungsplans (z. B. eines Schneidprogramms) kann erkannt werden, dass ein produziertes Werkstück aus dem mit der Kamera überwachten Arbeitsraum entnommen wurde. Über eine Schnittstelle zum MES kann ferner ermittelt werden, zu welcher Station das Teil als nächstes zu transportieren ist. Ein optisches Signal an den auch als Ladungsträgern bezeichneten Werkstücksammelstelleneinheiten, wie Paletten, z.B. Europaletten oder Transportkisten, kann dabei derart angesteuert werden, dass angezeigt wird, in welche das Teil abgelegt werden muss. Optische Signale umfassen beispielsweise spezifische Displays, eine Aktivierung von spezifischen LEDs oder eine Projektion von Information auf den Ladungsträger.

Eine Bildüberwachung und/oder ein Ortungssystem und/oder eine Sensorik am Ladungsträger kann die korrekte Ablage erkennen und überprüfen. Mit Rückmeldung an das MES kann bei Ausschussteilen, die z. B. an einer Ausschusssammelstelle abgelegt wurden, beispielsweise zum nächstmöglichen Zeitpunkt automatisch eine ergänzende Nachproduktion eingeleitet werden.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z. T. erhebliche Zeitansparung im Prozess von der Herstellung einer erforderlichen Teilanzahl bis zur nachfolgeprozesskorrekten Ablage bewirken, Fehler bei der Zuordnung vermeiden und intuitive Arbeitsabläufe durch z. B. automatische Verbuchung von Werkstücken ermöglichen. Mehrere Aufträge können in einer Tafel (z. B. zu schneidendes Blech) prozesssicher umgesetzt werden und eine auftragsübergreifende Separierung der geschnittenen Teile für die jeweiligen Folgeprozesse wird möglich. Die Handhabung der Komplexität von mehreren Aufträgen auf einer Tafel beim Absortieren ermöglicht ein automatisches (zyklisches) neues Schachteln aller offenen Aufträge gemeinsam.

So können eine flexible Abarbeitung der Teilentnahme und ein papierloser Prozessablauf (mit der begleitenden Zeiteinsparung in der Arbeitsvorbereitung), eine Einbindung von Laserschneidmaschinen oder Stanzmaschine in den teilautomatisierten Herstellungsprozess effizienter gestalten. Ferner kann durch die Fehlervermeidung und die automatische, korrekte Verbuchung die Basis für eine datenbasierte Echtzeitsteuerung der Blechfertigung gelegt werden. Entsprechend werden auch Maschinen, die bei der Erstellung von kleinen Losgrößen eingesetzt werden, in eine von MES im Rahmen der Industrie 4.0 gesteuerte Blechfertigung einbindbar.

Ferner kann der Einsatz von den Bediener einschränkenden mobilen Handgeräten wie Scanner oder Tablet entfallen.

Des Weiteren haben die Erfinder erkannt, dass durch Einbinden von den hierin offenbarten intelligenten Werkstücksammelstelleneinheiten der Produktionsablauf einer intelligenten Fabrik und insbesondere deren indirekten Prozesse effizienter gestaltet werden können. Dies umfasst die bereits zuvor erläuterten Vorteile durch die Ausgabe von Signalen an einen Bediener beim Absortiervorgang, wie ein Anzeigen der einem Werkstück zugeordneten Werkstücksammelstelleneinheit oder die Bereitstellung von Information über fehlsortierte Werkstücke und nachfolgende Bearbeitungsschritte. Allerdings umfasst das Einbinden auch Prozesse, wie den Transport zu einem nachfolgenden Prozessschritt, die Echtzeit-aktuelle Information über den Status eines Auftrags sowie beispielsweise über die Anzahl von bereits zugeordneten Werkstücken. Zusammen mit weiteren Ortungsvorrichtungen ergibt sich überdies die Möglichkeit, die aktuelle Position einer Werkstücksammelstelleneinheit an z. B. das MES zu kommunizieren und in einem Kontrollstand anzuzeigen oder die aktuelle Position vor Ort mitzuteilen, z. B. durch Blinken oder akustische Signale.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
Fig. 1 eine schematische räumliche Darstellung eines Ausschnitts einer intelligenten Fabrik mit einer Laserschneid- oder Stanz-Flachbettwerkzeugmaschine,
Fig. 2 eine schematische räumliche Darstellung einer beispielhaften Anordnung zur bildgebenden Erfassung eines Absortierbilddatensatzes,
Fig. 3 schematische beispielhafte Darstellungen eines Bearbeitungsbilddatensatzes eines Bearbeitungsplans und zweier erfasster Absortierbilddatensätze,
Fig. 4 eine schematische räumliche Darstellung einer beispielhaften Überwachung eines Ablegevorgangs eines entnommenen Werkstücks,
Fig. 5 eine schematische räumliche Darstellung einer beispielhaften Werkstücksammelstelleneinheit,
Fig. 6 ein Flussdiagramm zur Verdeutlichung eines beispielhaften Verfahrensablaufs bei der Unterstützung eines Absortiervorgangs und
Fig. 7 ein Flussdiagramm zur Verdeutlichung eines beispielhaften Verfahrensablaufs bei der Kommunikation mit einer Werkstücksammelstelleneinheit.

Hierin beschriebene Aspekte basieren zum Teil auf der Erkenntnis, dass bei Laserschneid- oder Stanz-Flachbettwerkzeugmaschinen das Vorliegen eines genauen Schneidplans in Kombination mit einem bildgebenden Erfassen des Sortiertischs, auf dem das erzeugte Schnittgut angeordnet ist, zur Unterstützung eines Absortiervorgangs und zum Gewinnen von für weitere Prozessabläufe geeigneter Information genutzt werden kann.

Die hierein beschriebenen Konzepte betreffen insbesondere Flachblechanlagen, die mittels Stanzen oder Laserschneiden aus sogenannten Tafeln (Ausgangsbleche mit vorbestimmter Dicke und vorbestimmten Flächenmaß) Werkstücke für nachfolgende Bearbeitungsschritte erzeugen. Insbesondere kann mit einer durch den Lasereinsatz sehr flexiblen Blechbearbeitung ein Werkstück in eine frei wählbare, bei Flachbettmaschinen flache Form überführt werden. Nachfolgende Biege- und Schweißprozesse erzeugen dann ein räumliches Produkt. Bei derartigen Laserschneid- oder Stanz-Flachbettwerkzeugmaschinen ist ein Bearbeitungsplan (z. B. Schneidplan) als Eingangsparameter in der Maschinensteuerung hinterlegt, der die genauen Formen und relative Positionen der erzeugten Werkstücke zueinander enthält. Neben dem (Schneid-) Bearbeitungsplan kann ferner zusätzliche z. B. während des Bearbeitungsvorgangs gewonnene Information, wie beispielsweise eine Koordinatentransformation zur Anpassung des (Schneid-) Bearbeitungsplans an die tatsächliche Lage des Rohblechs, genutzt werden. Derartige Information wird beispielsweise in der Steuerungseinheit mit dem (Schneid-) Bearbeitungsplan verknüpft abgelegt und bei Bedarf auch mit MES kommuniziert.

Sinkende Losgrößen, d. h. das Erfordernis in kurzen Zeitfenstern kleine Stückzahlen herstellen zu können, und überdies individualisierte Produkte sind aktuelle Herausforderungen an das Stanzen oder Laserschneiden, die sich insbesondere auf die Automatisierung von Produktionsabläufen in Blechfertigungsunternehmen auswirken. Die hierein beschriebenen Konzepte können insbesondere bei kleineren Losgrößen IT-gestützt Abläufe koordinieren und integrieren, diese einzelnen Maschinen zuordnen und bei einer anpassbaren Produktionsplanerstellung mitwirken.

Ziel ist es dabei, den hohen Anforderungen durch unterschiedlichste Produkte in sogenannten intelligenten Fabriken (den "smart Factories") gerecht zu werden. Die Erfinder haben erkannt, dass zur effizienteren Gestaltung von Fertigungsprozessen insbesondere Potenzial in den indirekten Prozessen, d.h. den dem Trennprozess vor- und nachgelagerten Schritten, liegt. Werden z. B. das Absortieren und das Ausgleichen von Ausschusswerkstücken effizienter und fehlerfreier ermöglicht, kann die Durchlaufzeit eines Auftrags über alle Fertigungsprozesse hinweg verkürzt und eine effizientere Auslastung der intelligenten Fabrik erreicht werden.

Eine transparente Fertigungsplanung, in der indirekte Prozesse vernetzt sind, bringt Übersicht in die Produktionsabläufe und erlaubt es, diese zu optimieren. Dabei wird der Bediener zum Prozessmanager, der mit seinem Überblick den Materialfluss gerade bei Aufträgen mit kleinen Losgrößen steuert.

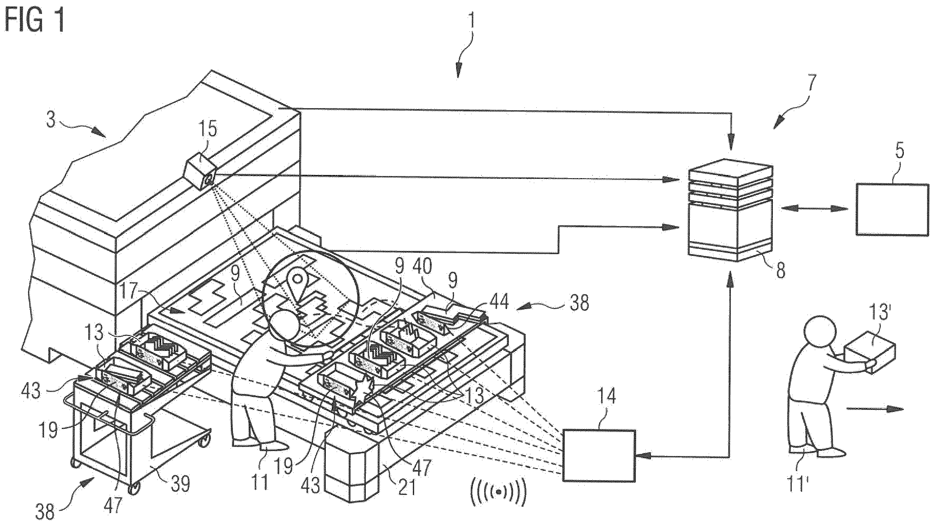

Fig. 1 zeigt eine Übersicht einer intelligenten Fabrik 1 ("smart factory"), die sich selbst anpassende Produktionsressourcen, wie eine beispielhaft dargestellte Laserschneid- oder Stanz-Flachbettmaschine 3, und ein zugehöriges MES 5 umfasst. Üblicherweise bilden mehrere derartige Flachbettwerkzeugmaschinen-Installation die intelligente Fabrik aus. In einem Netzwerk 7 laufen die virtuellen und physischen Produktionselemente und Produktionsschritte, insbesondere die Informationen über Werkstücke 9 (erforderliche Anzahl, Form, Material, Typ...) im MES 5 zusammen. Eine Steuerungseinheit 8, wie ein PC, Rechenknoten oder ähnliche geeignete Hardware, dient der Ansteuerung der Flachbettmaschine 3 sowie weiterer ihr zugeordneter Komponenten. Die Steuerungseinheit 8 ist insbesondere zum Unterstützen des Absortierens während eines Echtzeit-Betriebs der intelligenten Fabrik ausgebildet. Das zugrundeliegende Rechensystem weist beispielsweise digitale Prozessorsysteme mit Dateneingänge und Steuerungsausgänge aufweisenden Mikroprozessorkreisen auf, die gemäß computerlesbaren auf einem computerlesbaren Medium gespeicherten Anweisungen betrieben werden. Üblicherweise umfasst die Steuerungseinheit 8 eine hohe Rechenleistung für die Echtzeitunterstützung sowie Langzeit- (nicht volatilem) Speicher zum Speichern der Programmanweisungen als auch sehr schnellen Kurzzeit- (volatilen) Speicher zum Speichern von erfassten Daten und Auswertungsergebnissen während (oder sich ergebend aus) der Bilddatenerfassung und der Bilddatenverarbeitung.

Fig. 1 zeigt ferner zwei Absortiervorrichtungen 38, eine als Wagen 39 und eine über dem Sortiertisch 21 verfahrbare Brücke 40. Auf den Absortiervorrichtungen 38 stehen jeweils mehrere Werkstücksammelstelleneinheiten 13. An jeder Werkstücksammelstelleneinheit 13 befindet sich eine Anzeigeeinheit 43 mit einer Anzeige 19 und eine Signalabgabevorrichtung 47.

Die Anzeigeeinheit 43 kann eine einfach zu tauschende Einheit sein, z. B. mit einer Sende-Empfangseinheit und einer kabelunabhängigen Energieversorgung, z. B. mit Batterien, Ackumulatoren oder Kondensatoren. Die Anzeigeeinheit 43 kann an der Werkstücksammelstelleneinheit 13 angeordnet, insbesondere angebracht werden, z. B. durch Klemmen, Schrauben oder mittels magnetischer Haftung.

Die Signalabgabevorrichtung 47 kann in die Anzeigeeinheit 43 integriert oder extern von dieser angeordnet sein. Eine in die Anzeigeeinheit 43 integrierte Signalabgabevorrichtung 47 hat den Vorteil, dass sie die Energieversorgung und die Sende-Empfangseinheit gemeinsam mit der Anzeige 19 nutzen kann.

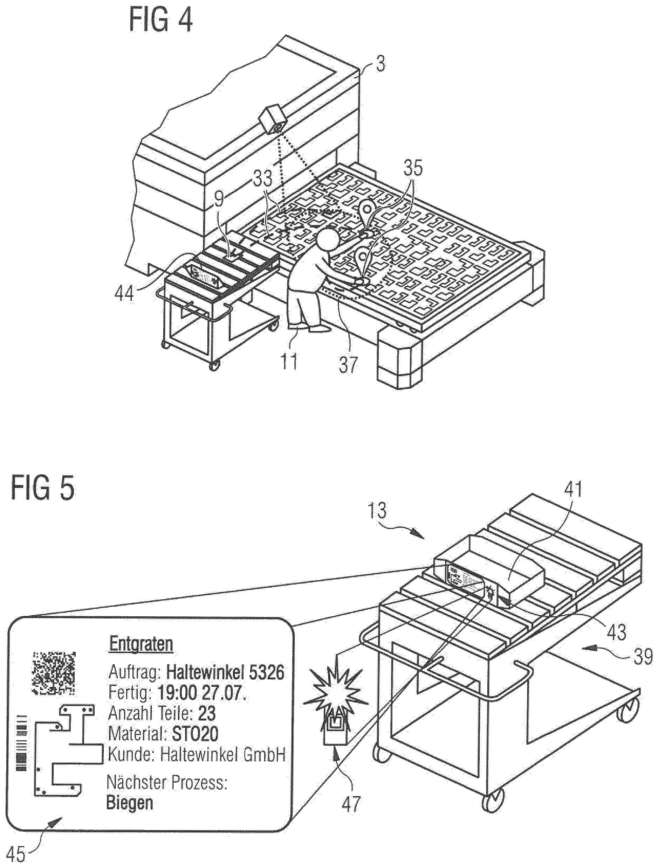

Die Werkstücksammelstelleneinheiten 13 in den Figuren 1 und 5 umfassen in den dort beschriebenen Ausführungsbeispielen Sammelbehälter, die beispielsweise einen Boden, auf dem die Werkstücke abgelegt werden (als Beispiel eines Ablegebereichs für Werkstücke), und optional eine oder mehrere Seitenwände aufweisen. Die Anzeigeeinheit 43 ist in Fig. 1 beispielhaft an einer Längsseitenwand des Sammelbehälters auf der Außenseite angebracht. Allgemein kann die Werkstücksammelstelleneinheit ein strukturelles Element, beispielsweise den Sammelbehälter, ein Gehäuse, eine Palette, einen Wagen oder allgemein ein eine Auflagefläche aufweisendes Bodenelement, umfassen.

In einigen Ausführungsformen kann die Werkstücksammelstelleneinheit 13 (alternativ zu einem Sammelbehälter) allgemein einen für die Werkstücke 9 vorgesehenen Ort (den Ablegebereich für Werkstücke) aufweisen. Dieser kann z. B. ein Bereich auf der Absortiervorrichtung 38, z. B eine Palette auf einem Wagen, sein. Dies erlaubt die Bereitstellung größerer Ablegebereiche für große Werkstücke. Diese definierten Bereiche können ferner eingesetzt werden, wenn das absortierte Werkstück 9, das einem Auftrag zuzuordnen ist, ein Einzelstück ist oder wenn es nur wenige Werkstücke 9 einer Kleinserie gibt.

Gerade bei großen und sperrigen Werkstücken werden derartige Ablegebereiche den Werkstücken zugeordnet, die dann mit einer in der Nähe positionierbaren und den Werkstücken zugeordneten Einheit aus Anzeigeeinheit 43 und Signalabgabevorrichtung 47 - eine kombinierte Signal-/Anzeigeeinheiten 44 wird in Fig. 1 auf der Brücke 40 gezeigt -Teil des Bearbeitungsprozesses werden.

Allgemein kann die Werkstücksammelstelleneinheit ein strukturelles Element umfassen. Beispiele für das strukturelle Element sind der Sammelbehälter, ein z. T. offenes Gehäuse/Gefäß, eine Palette, ein Wagen oder allgemein ein eine Auflagefläche aufweisendes strukturelles Element. Üblicherweise wird der Ablegebereich durch die Auflagefläche des strukturellen Elements, z. B. einen Boden des Sammelbehälters, eine Ablagefläche auf dem Wagen oder eine Oberseite einer Palette, die zum Transport z. B. größerer Werkstücke genutzt wird, gebildet. Dabei kann sich bei verschiedenen Bearbeitungsprozessen der Ablegebereich von einem strukturellen Element zu einem anderen strukturellen Element ändern, wobei die Anzeigeeinheit 43 und/oder die Signalabgabevorrichtung 47 beispielsweise umgesteckt werden kann. Alternativ kann die Darstellung von der einen auf die andere Anzeigeeinheit 43 (und/oder Signalabgabevorrichtung 47) umprogrammiert werden.

Ein Bediener 11 sortiert die Werkstücke 9, die einer von der Flachbettmaschine 3 ausgegebenen Tafel 17 entnommen wurden, den Werkstücksammelstelleneinheiten 13 zu. Dabei wird ihm nach Entnahme der Werkstücke 9 von der entsprechenden Signalabgabevorrichtung 47 angezeigt, zu welcher Werkstücksammelstelleneinheit 13 er das Werkstück 9 legen soll. Auf der Anzeige 19 wird der Status (allgemein Werkstückinformation) angezeigt, z.B. die Anzahl der abgelegten Werkstücke 9, wie viele noch fehlen oder ob ein Fehler erkannt wurde.

Ein Bediener 11, dem als "augmented operator" umfassende Informationen möglichst in Echtzeit zur Verfügung gestellt werden, steuert und überwacht die Fertigung. Als Erfahrungsträger und Entscheider behält der Bediener 11 die finale Entscheiderfunktion in allen relevanten Abläufen des Produktionsnetzwerks. So kann er Zielvorgaben situativ und kontextabhängig beeinflussen, unterstützt von IT-basierten Assistenzsystemen, wie dem hierin offenbarten Verfahren zur Unterstützung eines Absortiervorgangs und den hierin offenbarten Werkstücksammelstelleneinheiten 13.

Die Flachbettmaschine 3 ist mit Hinblick auf die Produktionsplanung eine mit anderen Komponenten in Kontakt stehende "social machine", die insbesondere mit der Auftragssteuerung und dem MES 5 intelligent vernetzt ist. So kann z.B. auf mögliche Abweichungen im Schneidprozess eigenständig und situationsabhängig reagiert werden.

In einer klassischen Fertigung würde ein Bediener Arbeitspapiere zu Aufträgen immer wieder zur Hand nehmen, manuell die Aufträge starten, Teile sortieren und diese Laufzetteln und Einrichteplänen zuordnen. Entsprechend häufig kann die Maschine so über längere Zeiträume still stehen.

Im Unterschied dazu optimiert die vernetzte Fertigung in der intelligenten Fabrik 1 ihre indirekten Prozesse und bringt Übersicht in die durchzuführenden Produktionsabläufe. Dabei wird der Bediener 11 zum Prozessmanager, der den Überblick behält und den Materialfluss regelt.

Allgemein ist das Abräumen und Sortieren z. B. geschnittener Teile zeitintensiv, fehleranfällig und in dieser komplexen Form (mehrere Aufträge aus einem Rohling) eine große Herausforderung. Mit den hierin vorgeschlagenen Konzepten können beispielsweise Fertigungsaufträge für kleine Stückzahlen pro Los für z. B. verschachtelte Teile effizient absortiert werden.

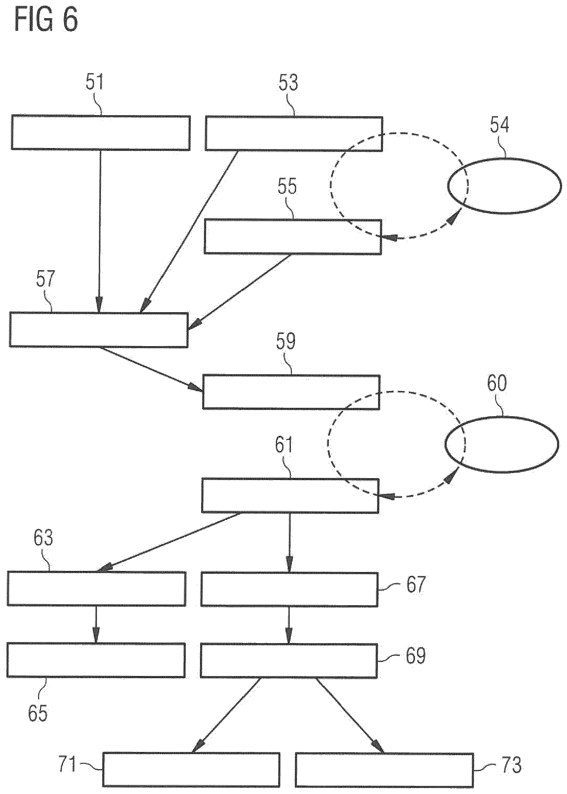

Wie nachfolgend ausführlicher erläutert wird, kann durch den Einsatz eines bildgebenden Systems, z. B. einer Kamera 15 mit Bildverarbeitung, sowie z. B. einem unterstützend bereitgestellten automatisierten Orten der Hand des Bedieners 11 erkannt werden, welches Werkstück 9 einer von der Flachbettmaschine 3 ausgegebenen Tafel 17 entnommen wurde. Anschließend kann sich eine Anzeige 19 an einer der intelligenten und vernetzten Werkstücksammelstelleneinheit 13 melden und dem Bediener 11 den z. B. vom MES 5 zugeordneten Ablageort anzeigen (siehe auch Schritte 63, 65 in Fig. 6). Die Ortung der Hand kann zusätzlich eine Verbuchung des Ablagevorgangs im MES 5 ermöglichen. Ferner können die als z. B. intelligente Kisten ausgeführten Werkstücksammelstelleneinheiten 13 auf z. B. einem e-Ink-Display aktuelle vom MES 5 erhaltene Auftragsinformationen ausgeben. Sie ermöglichen z. B. eine (evtl. räumlich grobe) elektrische Ortung und können beispielsweise durch Blinken dem Bediener eine intuitive "Feinsuche" ermöglichen. Beispielsweise sind die Werkstücksammelstelleneinheiten 13 mit einem eigenen Datenversorgungssystem 14 verbunden, welches insbesondere mit dem MES 5 und der Steuerungseinheit 8 zum Datenaustausch in Verbindung steht.

Nach erfolgter Absortierung einer Anzahl von benötigen Werkstücke in eine Werkstücksammelstelleneinheit 13' wird diese beispielsweise von einem Bediener 11' (oder automatisiert von einem Robotersystem) zu einem nachfolgenden Bearbeitungsschritt gebracht.

Die hierin vorgeschlagene Lösung erfolgt über einen elektronischen Assistenten, der den Bediener 11 informationsseitig mittels situativer Informationsbereitstellung unterstützt. Diese erlaubt es dem Bediener 11 weiterhin individuelle Präferenzen (wie: wo fange ich an, lege ich kleine Handpuffer an oder nicht, ...) bei der Absortierung umzusetzen. Die Lösung folgt dem Grundprinzip: Beobachten, Auswerten und situativ benötigte Informationen bereitstellen.

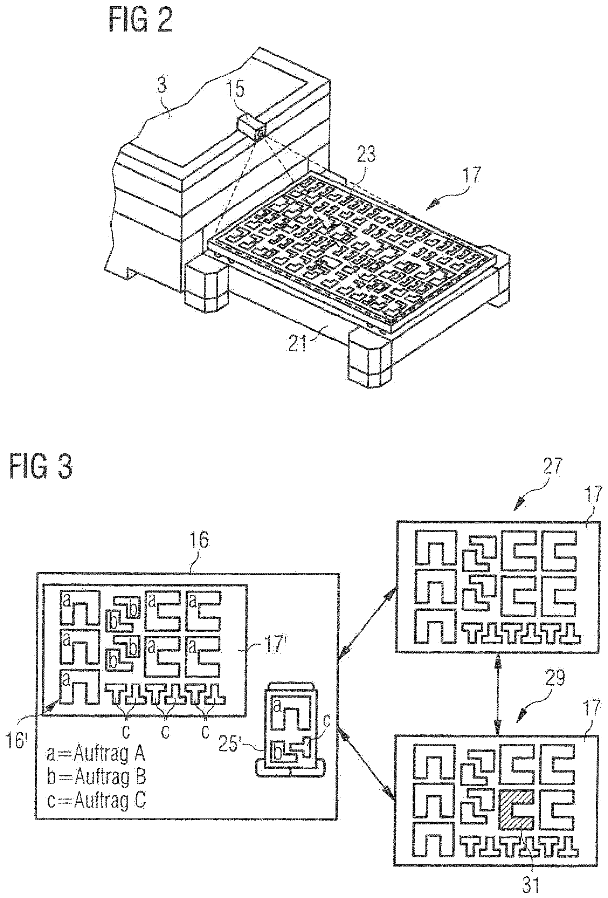

Figuren 2 und 3 zeigen beispielhaft wie ein Absortierbilddatensatz mit einem die Kamera 15 umfassenden Kamerasystem zur bildgebenden Erfassung gewonnen und verarbeitet wird (siehe auch Schritte 53, 55, 57 in Fig. 6). Um entnommene Teile erkennen zu können, erfasst die Kamera 15 einen Sortiertisch 21 der Flachbettmaschine 3, und insbesondere den Arbeitsraum 23 über der bearbeiteten Tafel, die absortiert werden soll. Die Absortierung erfolgt durch einen Bediener 11, im Ausführungsbeispiel der Fig. 1 in Gestalt eines lebenden Menschen gezeigt, also keinem Roboter. Um die Position des z. B. geschnittenen Blechs auf der Palette bestimmen zu können, muss die Kamera 15 auf die Maschinenkoordinaten kalibriert sein. Die Kamera ist Teil eines bildgebenden Systems, das beispielsweise optisch im sichtbaren und/ oder infraroten Wellenlängenbereich und/oder mit Schallwellen, insbesondere Ultraschallwellen, ein Bild des Sortiertischs 21 mit den zu sortierenden Teilen erfasst. Entsprechend umfasst die Kamera eine Sensorik zur Aufnahme von Bildsignalen in den Wellenlängenbereichen. Das bildgebende System umfasst eine Bildverarbeitungseinheit zur Erzeugung des Bildes aus den Bildsignalen.

Auf der Steuerungseinheit 8 mit Schnittstelle zur Kamera 15 und zur Flachbettmaschine 3 wird mit geeigneten Verfahren der Bildverarbeitung (z. B. Differenzbilderzeugung) erkannt, wenn ein Werkstück 9 vom Sortiertisch 21 entnommen wird. Dafür rekonstruiert die Software über die Schnittstelle zur Flachbettmaschine 3 aus dem Bearbeitungsprogramm die Belegung der Tafel 17 und die Umrisse der z. B. geschnittenen Werkstücke 9.

Fig. 3 zeigt schematisch einen Bearbeitungsplan 16 mit einem Bearbeitungsbilddatensatz 16', der der Anordnung von mindestens einem Werkstück 9 auf dem Sortiertisch 21 zugrunde lag (siehe auch Schritt 51 in Fig. 6). Man erkennt beispielhaft geplante Formteile in drei Typen a, b, c auf einer schematischen Tafel 17', die drei Aufträgen A, B, C zugeordnet sind. Ferner erkennt man, dass die erzeugten Formteile nach den Typen a, b, c auf einem Wagensymbol 25' als Werkstücksammelstelleneinheiten in drei Stapel sortiert werden sollen.

Fig. 3 zeigt ferner schematisch ein erstes Kamerabild 27 der Tafel 17 mit den daraus ausgeschnittenen Formteilen, das direkt nach dem Schneidvorgang, d. h. vor dem ersten Abnehmen eines Formteils, zu einem ersten Zeitpunkt erfasst wurde. Ein weiteres Kamerabild 29 zeigt die Tafel 17 nach dem ersten Abnehmen eines Formteils a (gestrichelter Bereich 31 in Fig. 3), d. h. zu einem zweiten (dem ersten Zeitpunkt nachfolgenden) Zeitpunkt.

Über eine ständige Erzeugung eines z. B. Differenzbildes zwischen dem realen Kamerabild und einem Referenzbild kann ein Abgleich mit z. B. einer virtuellen Überlagerung des Bearbeitungsbilddatensatzes des CNC-Programms oder eines Formteil-Typs stattfinden. Damit wird eindeutig erkannt, wenn ein Teil entnommen wurde. Nach jedem entnommenen Teil kann das Referenzbild mit der neuen Szene aktualisiert werden.

Der Abgleich kann dabei auch ein Nachführen der Absolutlage der Tafel mit den z. B. ausgeschnittenen Werkstücken erfolgen. Dies kann beispielsweise durch ein zusätzliches Erfassen der äußeren Kanten des Rohblechs erfolgen. Das Nachführen erlaubt es, dass eine globale Verschiebung der Anordnung, z. B. durch das manuelle Eingreifen des Bedieners, ausgeglichen werden kann.

Ferner kann die Flachbettmaschine 3 zum Eingravieren von Werkstück-spezifischen QR-Codes oder Materialnummern ein Lasersystem aufweisen (beispielsweise einen zusätzlichen Markierlaser oder einen entsprechend einstellbaren Schneidlaser). Wurde ein Werkstück mit einem QR-Code oder einer Materialnummer während der Bearbeitung versehen, kann anschließend das Kamerasystem diese Codierung zusätzlich erkennen und auslesen. Dies kann eine schnellere Zuordnung eines Werkstücks z. B. zu den im Bearbeitungsplan hinterlegten und zu erzeugenden Werkstücken und/oder zu weiteren im MES 5 hinterlegten Verarbeitungsschritten erlauben.

Um dem Bediener 11 mitteilen zu können, was mit dem entnommenen Teil als nächstes passieren soll (klassischerweise wird es zum Weitertransport in eine Kiste als Werkstücksammelstelleneinheit 13 gelegt), hat die Steuerungseinheit 8 Zugriff auf das MES 5. Dort sind nicht nur der nächste Standort (in welche Kiste muss das Teil gelegt werden), sondern auch weitere Informationen wie z. B. Material, Auftragsnummer, Kunde usw. hinterlegt.

Die Werkstücksammelstelleneinheiten 13 besitzen ebenfalls eine Kommunikationsschnittstelle zur Steuerungseinheit 8 und können Informationen zum Auftrag z. B. über ein E-Ink-Display als Anzeige 19 ausgeben. Über die Schnittstelle sind die Werkstücksammelstelleneinheiten 13 damit außerdem in der Lage, dem Bediener 11 bei Aufnahme eines Werkstücks 9 anzuzeigen, in welche Kiste er es ablegen soll (siehe auch Schritt 59 in Fig. 6). Über eine eingebaute Waage oder andere geeignete Sensoreinheit kann festgestellt werden, ob der Bediener 11 das Werkstück 9 in die richtige Kiste abgelegt hat (siehe auch Schritt 61 in Fig. 6). Entsprechend kann ein Feedback, z. B. über einen Zähler auf dem E-Ink-Display gesendet werden. Somit kann in der Steuerungseinheit 8 abgeglichen werden, ob alle Teile korrekt absortiert wurden oder ob Teile des Auftrags fehlen, die zum Beispiel durch das Restgitter gefallen sind.

Denkbar ist auch der Fall, dass der Bediener 11 beim Absortieren ein fehlerhaft produziertes Teil erkennt und dieses in eine für Ausschuss bereitstehende Sammelstelle ablegt (siehe auch Schritt 69 in Fig. 6). In einem weiteren Fall zeichnet die Flachbettmaschine 3 während der Tafel-Produktion automatisch Fehlschnitte, manuelle Bedienereingriffe oder gar Kollisionen auf und verbucht über die Schnittstelle zur Steuerungseinheit 8 betroffene Teile als Ausschuss. Für derartige und insbesondere alle beschriebenen Fälle kann automatisch ein Auftrag zur Nachproduktion der identifizierten Ausschussteile im MES 5 erstellt und eingeplant werden (siehe auch Schritt 73 in Fig. 6).

Über die Erweiterung des Systems mit einer Innenraum-Ortung und Schnittstellen zur Steuerungseinheit 8 können ferner die Position der Werkstücksammelstelleneinheiten festgestellt und/oder die Bewegung der Hand des Bedieners 11 festgehalten werden. Solch eine Ortung kann z. B. über ein Ultra-Wide-Band-System aus vier oder mehr so genannten "Anchors" und ein oder mehr "Tags" erfolgen. Die Anchors dienen als Receiver und können um den Arbeitsraum 23 stationär positioniert werden. Die Tags werden an allen Werkstücksammelstelleneinheiten und der Hand des Bedieners 11 angebracht und dienen zur Positionsbestimmung derselben. Weitere Systeme zur Innenraum-Ortung umfassen z. B. Bluetooth, WiFi, Infrarot und RFID.

Wie in Fig. 4 verdeutlicht wird, kann durch Tracking der Hand des Bedieners 11 festgestellt werden, ob die Werkstücke 9 in den richtigen Kisten oder bei einer beispielhaft gezeigten kombinierte Signal-/Anzeigeeinheiten 44 abgelegt wurden. Beispielhaft sind in Fig. 4 Bewegungstrajektorien 33 der Hand beim Entnehmen eines Werkstücks 9 gezeigt. Ferner kann durch die Tracking-Information das Verfahren zur Erkennung eines entnommenen Teils verbessert werden. Durch die Lokalisierung der Hand (z. B. Positionen 35), deren Bewegungstrajektorie oder Bewegungsteiltrajektorie wird eine interessierende Region 37 ("region of interest") im Bildbereich definiert. Die Bildverarbeitung muss damit nicht in jedem Rechenschritt den gesamten Arbeitsraum 23 nach Veränderungen absuchen, sondern lediglich die interessierende Region 37 um die Hand des Bedieners 11. Arbeiten mehrere Bediener 11 beim Absortiervorgang, kann gleichzeitig am Sortiertisch 21 für jeden Bediener 11 eine interessierende Region definiert werden. Jedem Bediener 11 können damit individuelle Informationen zum korrekten Ablageort des Werkstücks übermittelt werden.

Neben dem zuvor explizit angesprochenen Ansatz, die Logik und Rechenleistung in einem zentralen Rechenknoten (Steuerungseinheit) auszuführen, sind andere bekannte Topologien zur Vernetzung von Flachbettmaschine 3, Kamera 15 (allgemein einem bildgebenden System), Kisten mit Werkstücksammelstellen, MES 5 und Ortungssystemen einsetzbar.

Des Weiteren können die Funktion, Daten am Ablageort anzuzeigen, und die Kontrolle des Ablegens mit einer Datenbrille erfolgen. Über derartige "Augmented-Reality"-Brillen können neben der Anzeige des ortsfixen korrekten Ablageortes auch dessen Sollhöhe exakt angezeigt werden. Beispielsweise kann eine "Hololens"-Datenbrille die Anzeige von ortsfixen holografischen 3D-Objekten ermöglichen. Der Bediener 11 kann damit sehr einfach kontrollieren, ob ein Stapel von Werkstücken komplett ist.

In weiteren Ausführungsformen, die Datenbrillen einsetzen, stehen nach der Teileerzeugung diese dem Bediener 11 in einem Restgitter-Teileverbund zur Verfügung. Über die Steuerungseinheit 8 und das MES 5 ist bekannt, welches Teil sich an welcher Position in diesem Verbund befindet und an welchen Ablageort es gebracht werden soll. Der Bediener 11 erhält mit der Datenbrille eine Rückmeldung, ob das Teil erfolgreich erkannt wurde, oder einen Vorschlag für eine Retry-Strategie.

Dem Bediener 11 kann ferner über die Projektionsfläche der Datenbrille eine optimale Absortierstrategie vorgeschlagen werden, auch wenn er trotzdem nach einer selbst gewählten Strategie absortieren kann. Bei vielen Kleinteilen kann dem Bediener 11 z. B. vorgeschlagen werden, gleich mehrere gleiche Teile zu entnehmen. Durch einen Algorithmus kann begleitend in Echtzeit berechnet und angezeigt werden - z. B. abhängig von Ausdehnung und Gewicht der einzelnen Teile - wie viele Teile auf einmal entnommen werden können. Dies kann ferner je nach Bediener individuell anpassbar sein. Ferner kann dem Bediener 11, falls er ein Formteil des Typs a aufgenommen hat, die Lage weiterer Teile des gleichen Typs, beispielsweise entlang einer günstigen Bewegungstrajektorie, angezeigt werden. Dadurch können z. B. unnötige Wege vermieden werden.

Nachdem ein genommenes Teil erfolgreich eingelesen wurde, gibt die Steuerungseinheit 8 als Leitsystem, z. B. über die Projektionsfläche der Datenbrille, den korrekten Ablageort an den Bediener 11 aus. Dies kann z. B. ein nummeriertes Lagerfach sein. Sollte das Lagerfach an einer weiter entfernten Position sein, kann über die Projektionsfläche der Datenbrille auf einen Lageplan auf den Ablagebereich verwiesen werden. Die unterstützende Kamera der Datenbrille kann ferner das Lagerfach erkennen, sobald es sich innerhalb des sichtbaren Bereiches befindet und markiert es auf der Projektionsfläche.

Das Leitsystem überwacht ferner während des Ablegens, ob das Teil in das richtige Fach gelegt wurde, und gibt entsprechend über die Projektionsfläche der Brille eine Rückmeldung an den Bediener 11. Verschiedene auf dem Markt verfügbare Datenbrillen, die idealerweise mit eigenem GPS-Koordinatensystem versehen oder mit einem externen Ortungssystem koppelbar sind, können somit in die hierin vorgeschlagenen Konzepte eingebunden werden.

Fig. 5 zeigt eine Werkstücksammelstelleneinheit 13 auf einem Wagen 39. Die Werkstücksammelstelleneinheit 13 umfasst einen Ablegebereich 41 für Werkstücke 9, die im Rahmen eines Bearbeitungsplans von einer Werkzeugmaschine erzeugt wurden. Die Werkstücksammelstelleneinheit 13 weist ferner eine Anzeigeeinheit 43 auf, die dazu ausgebildet ist, z. B. von der Steuerungseinheit 8 der Werkzeugmaschine Information 45 über die in der Werkstücksammelstelleneinheit 13 abgelegten Werkstücke zu empfangen und für einen Bediener auszugeben.

Beispielsweise ist die Anzeigeeinheit 43 z. B. dazu ausgebildet, Information über die Anzahl der abgelegten Werkstücke 9, noch fehlende Werkstücke, einen nachfolgenden Bearbeitungsschritt, einen zugrundeliegenden Auftrag (Kunde), Soll-Material etc. zu empfangen und auszugeben.

Die Anzeigeeinheit 43 kann dabei eine reale, beispielsweise als E-Ink-Anzeige (auch als elektronische Papier-Anzeige bezeichnet), am Wagen 39 angebrachte Anzeigeeinheit sein. Alternativ oder ergänzend kann eine digital im Rahmen einer Steuerungsdarstellung emulierte Anzeigeeinheit, beispielsweise im Rahmen eines z.B. auf einem Tablet angezeigten User-Interfaces, verwendet werden.

Neben dem zuvor explizit angesprochenen Ansatz von E-Ink-Anzeigen können Anzeigedaten und Feedback der Kisten bei Erkennung eines abgelegten Teils auch über ein Aktivieren einer Signalabgabevorrichtung 47, beispielsweise einer oder mehrerer LEDs, eines aktiven LCD-Displays, einer akustischen Signalquelle, oder durch Projektion mit einem Beamer oder mit einem Laser-Scanner gegeben werden. Ferner können (ergänzende) Kontrollmessungen der korrekten Ablage mit einer Waage, einer Höhenmessung eines Stapels (optische Meßverfahren, wie z. B. Laserscanner) oder einer bildbasierten Kontrolle (Kamerazählsysteme) eingesetzt werden. Ebenfalls kann (ergänzend) ein Erschütterungssensor (beispielsweise ein Beschleunigungssensor) verwendet werden. Allgemein ist die Signalabgabevorrichtung 47 zum Ausgeben von Feedback-Signalen an einen Bediener ausgebildet ist.

Wie zuvor angesprochen können die Anzeigeeinheit 43 und die Signalabgabevorrichtung 47 in einer Einheit zusammengefasst werden, die hierein auch als kombinierte Signal-/Anzeigeeinheit bezeichnet wird. Kombinierte Signal-/Anzeigeeinheiten werden insbesondere im Rahmen des hierin offenbarten Kommunikationssystems eingesetzt und ermöglichen - zusammen mit insbesondere mobilen Werkstücksammelstelleneinheiten - ein Nachrüsten von Installationen von Flachbettwerkzeugmaschinen zu intelligenten Fabriken.

Neben fest mit einem strukturellen Element verbundenen Anzeigeeinheiten 43 und Signalabgabevorrichtungen 47 können kombinierte Signal-/Anzeigeeinheiten auch als unabhängige Einheiten im Prozessablauf eingesetzt werden, da sie einem oder mehreren Werkstücken zugeordnet werden können, falls die Geometrie derselben zum Beispiel die Verwendung von Ladungsträgern nicht sinnvoll erlaubt. Die kombinierten Signal-/Anzeigeeinheiten können dann von einem Bediener zusammen mit den zugeordneten Werkstücken von Bearbeitungsschritt zu Bearbeitungsschritt mitgenommen werden.

Fig. 6 zeigt ein Flussdiagramm zur Verdeutlichung eines beispielhaften Verfahrensablaufs bei der Unterstützung eines Absortiervorgangs. Dabei wird davon ausgegangen, dass auf einem Sortiertisch Werkstücke angeordnet sind, die mit einer Flachbettwerkzeugmaschine, insbesondere einer wie zuvor beschriebenen Laserschneid- oder Stanz-Flachbettwerkzeugmaschine, basierend auf einem Bearbeitungsplan erzeugt wurden.

In der Steuerungseinheit 8 wird ein Bearbeitungsbilddatensatz des Bearbeitungsplans (siehe z. B. den Bearbeitungsbilddatensatz 16' in Fig. 3) bereitgestellt (Schritt 51), der der Anordnung der erzeugten Werkstücken zugrunde lag. Ferner wird der Sortiertisch mit der Mehrzahl von räumlich nebeneinander angeordneten Werkstücken bildgebend, z. B. optisch im sichtbaren oder infraroten Wellenlängenbereich, oder mit Schallwellen, insbesondere Ultraschallwellen, erfasst, um einen ersten Absortierbilddatensatz (siehe z. B. das erste Kamerabild 27 in Fig. 3) zu erzeugen (Schritt 53).

Es folgt eine Entnahme mindestens eines Werkstücks vom Sortiertisch (Schritt 54) und eine Wiederholung der bildgebenden Erfassung des Sortiertischs, basierend auf der ein zweiter Absortierbilddatensatz erzeugt wird (Schritt 55).

Nun werden der erste Absortierbilddatensatz und der zweite Absortierbilddatensatz unter Einbezug des Bearbeitungsbilddatensatzes - beispielsweise mit einem Bildverarbeitungsalgorithmus - abgeglichen (Schritt 57), um ein Sortiersignal zu erzeugen. Das Sortiersignal umfasst Information über den Typ, die Lage und/oder die Form und optional Ortungsinformation des mindestens einen entnommenen Werkstücks. Es kann ferner angeben, ob und wie mit dem mindestens einen entnommenen Werkstück weiter zu verfahren ist. Das Sortiersignal kann der Steuerungseinheit 8 und/oder dem MES 5 übermittelt werden und nachgeordnete Prozesse auslösen.

Das Abgleichen des ersten Absortierbilddatensatzes und des zweiten Absortierbilddatensatzes kann eine Bildverarbeitung zur Erkennung der Form eines entnommenen Werkstücks oder der Form der leer zurückgebliebenen Stelle auf dem Sortiertisch und/oder eine Bildverarbeitung für einen Vergleich der erkannten Form mit einer im Bearbeitungsprogramm hinterlegten Form umfassen.

Ferner kann ein Ablegesignal in Abhängigkeit des Sortiersignals zur Unterstützung der Zuordnung des entnommenen Werkstücks durch einen Bediener zu einem nachfolgenden Bearbeitungsschritt ausgegeben werden (Schritt 59). Z. B. wird ein auftragsgemäßes Ablegen des entnommenen Werkstücks an einer dem Auftrag entsprechenden Werkstücksammelstelle angeregt. Dies kann beispielsweise ein Blinken einer zugehörigen Kiste, eine spezielle Anzeige auf einer der Kiste zugeordneten Anzeige und/oder ein Einblenden einer Markierung der zugehörigen Kiste in ein Display einer Datenbrille umfassen.

Dabei kann ein von einem Bediener durchgeführter Ablegevorgang (Schritt 60) des entnommenen Werkstücks überwacht werden (Schritt 61). Das Überwachen des Ablegevorgangs umfasst z. B. eine Gewichtsüberwachung einer spezifischen Werkstücksammelstelle und/oder ein Überwachen einer Bewegungstrajektorie oder Bewegungsteiltrajektorie des entnommenen Werkstücks oder eines die Bewegung bewirkenden Objekts (siehe z. B. Fig. 4).

Wenn der Ablegevorgang einem dem Sortiersignal zugeordneten Ablegevorgang entspricht, kann ein Sortiervorgangsvollendungssignal ausgegeben werden (Schritt 63), beispielsweise wieder durch ein Blinksignal, spezielle Ausgaben auf einer Anzeige z. B. der Werkstücksammelstelleneinheit und/oder eine Markierung im Datenbrillendisplay. So kann z. B. eine Werkstücksammelstellen-spezifische Anzeige bzgl. der Ablage des entnommenen Werkstücks aktualisiert werden (Schritt 65).

Sollte der Ablegevorgang von einem dem Sortiersignal zugeordneten Ablegevorgang abweichen, kann ein Fehlersignal ausgegeben werden (Schritt 67), beispielsweise wieder durch ein Blinksignal an der Werkstücksammelstelleneinheit, spezielle Ausgaben auf einer Anzeige an der Werkstücksammelstelleneinheit und/oder eine Markierung im Datenbrillendisplay. Begleitend kann Information bezüglich des dem Sortiersignal zugeordneten richtigen Ablegevorgangs wiederholt dargestellt werden.

Ferner kann z. B. überwacht werden, ob bei einem Ablegevorgang mindestens ein entnommenes Werkstück in einer Ausschusssammelstelle durch einen Bediener abgelegt wurde (Schritt 69). Das entnommene Werkstück kann vom MES 5 als Ausschussstück vermerkt werden, z. B. optional in einer Fehlteileliste aufgenommen werden (Schritt 71).

Für erkannte Ausschussteile kann ein Ergänzungsproduktionssignal an ein Produktionsleitsystem ausgegeben werden. Dort werden z. B. Produktionsparameter des entnommenen Werkstücks mit einem nachfolgenden Bearbeitungsplan abgeglichen. Bei Übereinstimmung der Produktionsparameter mit dem nachfolgenden Bearbeitungsplan und einer Verfügbarkeit einer erneuten Erzeugung des entnommenen Werkstücks, kann der nachfolgende Bearbeitungsplan mit einem Erzeugungsschritt zur Erzeugung eines Ersatzwerkstücks für das Ausschussstück ergänzt werden (Schritt 73). Die Erzeugung eines Ersatzwerkstücks kann auch in späteren, nachfolgenden Bearbeitungsplänen vorgesehen werden.

Wie in Fig. 6 mit gestrichelten Pfaden angedeutet wird, können verschiedene Schritte des Verfahrens wiederholt erfolgen, um eine kontinuierliche Echtzeit-Überwachung und Unterstützung des Absortiervorgangs zu gewährleisten.

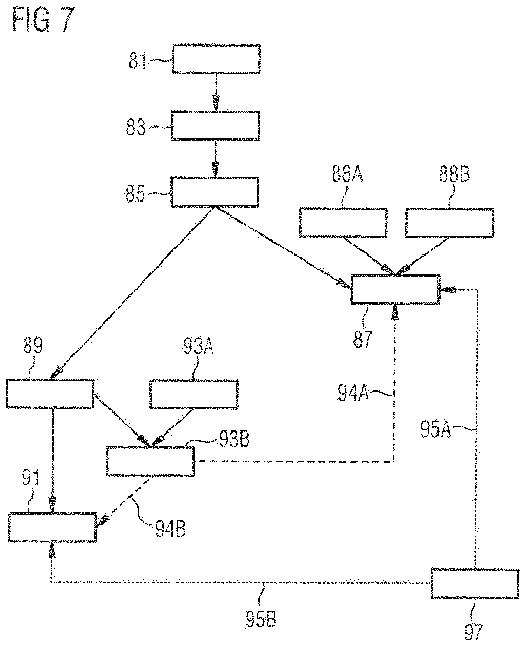

Des Weiteren zeigt Fig. 7 ein Flussdiagramm, das beispielhaft einen Verfahrensablauf bei der Kommunikation mit einer Werkstücksammelstelleneinheit verdeutlicht. Dies wird insbesondere in Bezug aud die in Fig. 1 gezeigte intelligente Werkstücksammelstelleneinheit erläutert.

Beispielsweise erfolgt mit den im Rahmen der Figur 6 erläuterten Schritten ein Abgleichen (Schritt 81) des z. B. im MES 5 hinterlegten Bearbeitungsplans mit einem Absortierbilddatensatz. Dieser wurde durch ein bildgebendes Erfassen (Schritt 53 in Fig. 6) der Werkstücke erzeugt. Basierend auf dem Abgleichen wird ein Sortiersignal erzeugt (Schritt 83), das Information über ein weiterzuverarbeitendes Werkstück umfasst.

Zum Absortieren der erzeugten Werkstücke stehen mehrere Werkstücksammelstelleneinheiten zur Verfügung, wobei jede der Werkstücksammelstelleneinheiten spezifischen Werkstücken und entsprechend einem spezifischen nachfolgenden Bearbeitungsschritt zugeordnet ist. Die Zuordnung kann mit dem Absortieren eines ersten Werkstücks durch den Bediener erfolgen oder sie kann zentral z. B. vom MES vorgenommen werden.

Basierend auf dem Sortiersignal wählt die Steuerungseinheit bzw. das MES die Werkstücksammelstelleneinheitn aus (Schritt 85), die dem Sortiersignal zugeordnet ist, und stellt eine Kommunikationsverbindung her.

Die Kommunikationsverbindung erlaubt es, die Signalvorrichtung der ausgewählten Werkstücksammelstelleneinheit zur Ausgabe eines Identifikationssignals anzusteuern (Schritt 87). Durch das Identifikationssignal wird einem Bediener der Ort der ausgewählten Werkstücksammelstelleneinheit zum Ablegen des weiterzuverarbeitenden Werkstücks angezeigt, insbesondere wird seine Aufmerksamkeit auf die Werkstücksammelstelleneinheit gerichtet.

Wie in Fig. 7 angedeutet ist, kann das Identifikationssignal jedes Mal ausgegeben werden, wenn ein Sortiersignal erzeugt wird. Ferner kann das Identifikationssignal ausgegeben werden, wenn z. B. eine Ortungsanfrage an die ausgewählte Werkstücksammelstelleneinheit gestellt wird (Schritt 88A) und/oder wenn ein Nahfeldsensor der Werkstücksammelstelleneinheit z. B. beim Suchen der Werkstücksammelstelleneinheit oder beim Ablegen eines Werkstücks aktiviert wird (Schritt 88B).

Die Kommunikationsverbindung erlaubt es ferner, Werkstückinformation, die sich aus dem Sortiersignal über das weiterzuverarbeitende Werkstück ergibt, an die ausgewählte Werkstücksammelstelleneinheit zu übermitteln (Schritt 89). Die Werkstückinformation wird auf der Anzeigeeinheit der ausgewählten Werkstücksammelstelleneinheit angezeigt (Schritt 91). Beispielsweise fragt die ausgewählte Werkstücksammelstelleneinheit die zum Sortiersignal gehörende Werkstückinformation von einer Steuerungseinheit der Werkzeugmaschine ab und zeigt diese menschenlesbar und/oder maschinenlesbar auf einer Anzeige der Anzeigeeinheit an. Das Vorliegen der Werkstückinformation kann nun weiter zur Unterstützung der Sequenz von Bearbeitungsschritten zur Bearbeitung von Werkstücken genutzt werden.

Beispielsweise kann eine Anzahl von in der Werkstücksammelstelleneinheit abgelegten Werkstücken erfasst werden (Schritt 93A) und mit einer Sollanzahl verglichen werden (Schritt 93B), die insbesondere als Teil der Werkstückinformation der Werkstücksammelstelleneinheit bereitgestellt wurde. Die Anzahl der abgelegten Werkstücke kann basierend auf dem bildgebenden Erfassen des Sortiertischs, insbesondere auf einem Überwachen eines von einem Bediener durchgeführten Ablegevorgangs eines entnommenen Werkstücks, und/oder mittels Gewichtsüberwachung der Werkstücksammelstelleneinheit erfolgen. Wie mit den gestrichelten Pfeilverbindungen 94A und 94B in Fig. 7 dargestellt wird, kann bei Erreichen der Sollanzahl ein weiteres Identifikationssignal durch die Signalvorrichtung ausgegeben und/oder Information bzgl. des nächsten Bearbeitungsschritts, die insbesondere als Teil der Werkstückinformation der Werkstücksammelstelleneinheit bereitgestellt wurde, von der Anzeigeeinheit angezeigt werden.

Wie mit der gepunkteten Pfeilverbindung 95A in Fig. 7 ferner dargestellt wird, kann beispielsweise die Signalvorrichtung der ausgewählten Werkstücksammelstelleneinheit zur Ausgabe eines Sortiervorgangsvollendungssignals angesteuert werden, wenn z. B. durch das bildgebende Erfassen erkannt wurde (Schritt 97), dass ein Werkstückablegevorgang korrekt ausgeführt wurde. Dabei kann auch die Anzeigeeinheit der ausgewählten Werkstücksammelstelleneinheit bzgl. der angezeigten Anzahl von Werkstücken aktualisiert werden (gepunktete Pfeilverbindung 95B). Ebenso kann die Signalvorrichtung der ausgewählten Werkstücksammelstelleneinheit zur Ausgabe eines Fehlersignals angesteuert werden, wenn der Werkstückablegevorgang nicht in die korrekte Werkstücksammelstelleneinheit ausgeführt wurde.

Bezugnehmend auf Fig. 1 kann bei den zuvor beispielhaft erläuterten Schritten die Kommunikation auf einer datentechnischen Verbindung der Werkstücksammeleinheit 13, insbesondere deren Anzeigeeinheit 43 und deren Signalvorrichtung 47, mit der Steuerungseinheit 8 der Werkzeugmaschine 3 und damit dem MES 5 basieren. Der Datenaustausch kann allgemein per Datenkabel (alle üblichen Datenverbindungen (CAN, Profibus, RS232, RS485, USB, LAN etc.) erfolgen. Er kann aber insbesondere auch per Infrarot oder Funk (WLAN, WiFi, etc.) erfolgen. Wie beispielhaft in Fig. 1 gezeigt ist, sind die Werkstücksammelstelleneinheiten 13 mit einem eigenen Datenversorgungssystem 14 kabellos mit dem MES 5 und der Steuerungseinheit 8 zum Datenaustausch verbunden.

Die Kommunikation erlaubt ferner, dass einem Bediener direkt an der Werkstücksammelstelleneinheit Information bereitgestellt werden kann, die z. B. vom MES 5 empfangen wurde. Zum einen umfasst die bereitstellbare Information Werkstück-spezifische Information (hierin auch als Werkstückinformation bezeichnet), die sich auf den Herstellungsprozess und die damit verbundenen Daten der Werkstücke bezieht, die in der Werkstücksammelstelleneinheit abgelegt werden. Zum anderen umfasst die bereitstellbare Information Information zur Werkstücksammelstelleneinheit selbst, insbesondere deren Position, die beispielsweise optisch und/oder akustisch als Identifikationssignal über die Signalvorrichtung mitgeteilt werden kann.

Die Werkstückinformation kann beispielsweise über eine Anzeigeeinheit stromsparend, und damit z. B. batteriebetrieben erfolgen. Die Anzeigeeinheit kann fest mit der Werkstücksammelstelleneinheit verbunden sein oder zu Beginn des Einsatzes einer Werkstücksammelstelleneinheit an dieser befestigt werden. In jedem Fall wird üblicherweise ein Auftrag zur Bearbeitung von Werkstücken einer Werkstücksammelstelleneinheit fest zugeordnet. So kann, wenn die Kiste oder Palette oder allgemein der Ladungsträger zu einem nächsten Arbeitsplatz getragen wird, die Anzeigeeinheit 43, z. B. von einer übergeordneten Steuerungssoftware angesteuert, den Ablauf vereinfachen und z. B. den nächsten Arbeitsschritt anzeigen.

Die Werkstücksammelstelleneinheit 13 kann ferner in ein Ortungssystem integriert werden. Beispielsweise kann mit einem entsprechenden System in der Werkzeugmaschinenhalle in der mehrere Bearbeitungsmaschinen und/oder Arbeitsplätze vorgesehen sind, über Sender-Empfängersysteme eine Ortung ermöglicht werden.

Ein Bediener, der in einer Schaltzentrale den Bearbeitungsvorgang überwacht und steuert, kann auf seinem Überwachungsmonitor sehen, wo ein spezifischer Auftrag gerade in der Prozesskette steht und wie sein Status gerade ist. Entsprechend kann er auch direkt auf die Anzeigeeinheit zugreifen, um angezeigte Daten (Werkstückinformation) wie Präferenzen, Arbeitsschritte etc. anzupassen. Alternativ oder ergänzend kann dies auch vor Ort mit einer Eingabevorrichtung an der Werkstücksammelstelleneinheit (z. B. Taster, Schalter, Touchpad) erfolgen oder über eine Datenschnittstelle, die einer externen z.B. mobilen Eingabeeinheit Zugang verschafft (Smartphone, Ipad, Smartwatch etc.). Entsprechend weist die Werkstücksammelstelleneinheit z. B. ein Nahfeldfunknetz (Bluetooth, NFC) auf. Dies kann beispielsweise auch als Teil eines Nahfeldortungssystems zur Ortung der Werkstücksammelstelleneinheit eingesetzt werden. Letzteres erleichtert das Finden einer Werkstücksammelstelleneinheit, wenn sie z. B. in einer Vielzahl von Werkstücksammelstelleneinheiten versteckt ist. Beispielsweise wird die Werkstücksammelstelleneinheit gezielt angesteuert, damit die Signalvorrichtung (z.B. eine hell leuchtende LED) aktiviert wird.

Die Nahfeldortung kann ferner beispielsweise beim Absortieren eingesetzt werden, indem z. B. der Ort einer Hand (insbesondere eines intelligenten Handschuhs, der mit dem Ortungssystem wechselwirkt) von der Werkstücksammelstelleneinheit aus geortet wird. Entnimmt die "Hand" eines Bedieners ein Bauteil vom Restgitter wird der Bauteilort im MES vom Restgitter auf die Hand gebucht. Bewegt sich die Hand in die Nähe eines Ortungssystems der Werkstücksammelstelleneinheit, wird im MES gebucht, dass dieses Teil an der zugehörigen Werkstücksammelstelleneinheit abgelegt wurde. Zum einen kann das Ortungssystem erkennen, dass die Hand mit dem Werkstück in die Nähe kam. Zum anderen kann ein übergeordnetes System (z. B. das MES) die Werkstücksammelstelleneinheit und die Handposition verknüpfen.

Die offenbarte Werkstücksammelstelleneinheit 13, die Flachbettwerkzeugmaschine 3, das Kommunikationssystem, und/oder das Verfahren können insbesondere auch für Werkstücke 9 und/oder Formteile a, b, c mit mehr als vier Ecken und/oder mehr als vier Kanten verwendet werden.

## Patentansprüche

1. Verfahren zur Durchführung einer Sequenz von Bearbeitungsschritten zur Bearbeitung von Werkstücken (9), die mit einer Flachbettwerkzeugmaschine, insbesondere einer Laserschneid- oder Stanz-Flachbettwerkzeugmaschine (3), gemäß einem Bearbeitungsplan (16) erzeugt wurden, der genaue Formen und relative Positionen der erzeugten Werkstücke zueinander enthält, und wobei die Werkstücke auf einem Sortiertisch angeordnet sind, sowie Bereitstellen (Schritt 51) eines Bearbeitungsbilddatensatzes (16') des Bearbeitungsplans (16), wobei der Anordnung der erzeugten Werkstücke (9) ein Bearbeitungsbilddatensatz (16') des Bearbeitungsplans (16) zugrunde lag, wobei Werkstücksammelstelleneinheiten (13) zum Sammeln von Werkstücken (9) eingesetzt werden und mindestens eine der Werkstücksammelstelleneinheiten (13) eine Signalvorrichtung (47) und eine Anzeigeeinheit (43) aufweist, mit den Schritten in der Abfolge:
Erkennen welches erzeugte Werkstück aus dem Sortiertisch entnommen wurde, durch Abgleichen (Schritt 81) des Bearbeitungsbilddatensatzes (16') des Bearbeitungsplans (16) mit einem Absortierbilddatensatz (27, 29), der durch ein bildgebendes Erfassen der Werkstücke (9) erzeugt wurde, wobei ein Sortiersignal erzeugt wird (Schritt 83), das Information über ein weiterzuverarbeitendes Werkstück (9) umfasst,
Auswählen (Schritt 85) einer der Werkstücksammelstelleneinheiten (13), die dem Sortiersignal zugeordnet ist,
Ansteuern (Schritt 87) der Signalvorrichtung (47) der ausgewählten Werkstücksammelstelleneinheit (13) zur Ausgabe eines Identifikationssignals, das einem Bediener (11) den Ort der ausgewählten Werkstücksammelstelleneinheit (13) zum Ablegen des weiterzuverarbeitenden Werkstücks (9) anzeigt,
Übermitteln (Schritt 89) von Werkstückinformation, die sich aus dem Sortiersignal über das weiterzuverarbeitende Werkstück (9) ergibt, an die ausgewählte Werkstücksammelstelleneinheit (13), und
Anzeigen (Schritt 91) der Werkstückinformation auf der Anzeigeeinheit (43) der ausgewählten Werkstücksammelstelleneinheit (13).

2. Verfahren nach Anspruch 1, ferner mit
Ausgeben des Identifikationssignals durch die Signalvorrichtung (47) bei einer Ortungsanfrage an die ausgewählte Werkstücksammelstelleneinheit (13) (Schritt 88A) und/oder bei Aktivierung eines Nahfeldsensors (Schritt 88B) und
wobei die Signalvorrichtung (47) optional zum Ausgeben eines optischen, insbesondere Blink-, und/oder akustischen Identifikationssignals angesteuert wird, so dass die Aufmerksamkeit eines Bedieners auf die Werkstücksammelstelleneinheit (13) gerichtet wird.

3. Verfahren nach Anspruch 1 oder 2, ferner mit
Erfragen der Werkstückinformation zu einem Sortiersignal von einer Steuerungseinheit (8) der Werkzeugmaschine durch die ausgewählte Werkstücksammelstelleneinheit (13) und
Anzeigen der empfangenen Werkstückinformation mit der Anzeigeeinheit (43) der ausgewählten Werkstücksammelstelleneinheit (13), insbesondere menschenlesbar und/oder maschinenlesbar.

4. Verfahren nach einem der vorhergehenden Ansprüche, ferner mit
Erfassen (Schritt 93A) einer Anzahl von in der Werkstücksammelstelleneinheit (13) abgelegten Werkstücken,
Abgleichen (Schritt 93B) der Anzahl mit einer Sollanzahl, die insbesondere als Teil der Werkstückinformation der Werkstücksammelstelleneinheit (13) bereitgestellt wurde, und
Ausgeben des Identifikationssignals durch die Signalvorrichtung (47) bei Erreichen der Sollanzahl und/oder Ausgeben von Information bzgl. des nächsten Bearbeitungsschritts, die insbesondere als Teil der Werkstückinformation der Werkstücksammelstelleneinheit (13) bereitgestellt wurde.

5. Verfahren nach Anspruch 4, wobei das Erfassen der Anzahl der in der Werkstücksammelstelleneinheit (13) abgelegten Werkstücke basierend auf dem bildgebenden Erfassen eines Sortiertischs (21) der Werkzeugmaschine, insbesondere auf einem Überwachen eines von einem Bediener (11) durchgeführten Ablegevorgangs eines entnommenen Werkstücks (9), und/oder mittels Gewichtsüberwachung der Werkstücksammelstelleneinheit (13) erfolgt.

6. Verfahren nach einem der vorhergehenden Ansprüche, ferner mit
Ansteuern der Signalvorrichtung (47) der ausgewählten Werkstücksammelstelleneinheit (13) zur Ausgabe eines Sortiervorgangsvollendungssignals, wenn erkannt wird, dass ein Werkstückablegevorgang korrekt ausgeführt wurde (Schritt 97), und optional
Aktualisieren der Anzeigeeinheit (43) der ausgewählten Werkstücksammelstelleneinheit (13) bzgl. der angezeigten Anzahl von Werkstücken (9).

7. Verfahren nach einem der vorhergehenden Ansprüche, ferner mit
Ansteuern der Signalvorrichtung (47) der ausgewählten Werkstücksammelstelleneinheit (13) zur Ausgabe eines Fehlersignals, wenn der Werkstückablegevorgang nicht in die Werkstücksammelstelleneinheit (13) ausgeführt wurde.

8. Verfahren nach einem der vorhergehenden Ansprüche, ferner mit
Abgleichen von Ortsinformation der Werkstücksammelstelleneinheit (13) und Ortsinformation eines absortierten Werkstücks (9), insbesondere einer das Werkstück bewegenden Hand, wobei das Werkstück bei positivem Abgleich der Ortsinformationen der Werkstücksammelstelleneinheit (13) zugebucht wird.

9. Verfahren nach Anspruch 8, wobei der Abgleich der Ortsinformationen durch die Werkstücksammelstelleneinheit (13) und/oder ein übergeordnetes Steuerungssystem der Werkzeugmaschine durchgeführt wird.

10. Flachbettwerkzeugmaschine, insbesondere Laserschneid- oder Stanz-Flachbettwerkzeugmaschine (3), mit
einer Bearbeitungseinheit, insbesondere einer Laserschneid- oder Stanz-Bearbeitungseinheit,
einer Steuerungseinheit (8), in der ein Bearbeitungsplan (16) abgelegt ist, zur Ansteuerung der Bearbeitungseinheit zur Erzeugung von räumlich gemäß einem Bearbeitungsbilddatensatz (16') nebeneinander angeordneten Werkstücken (9), wobei die Steuerungseinheit (8) zum Durchführen des Verfahrens nach einem der Ansprüche 1 bis 9 ausgebildet ist,
einem Sortiertisch (21) zum Bereitstellen der angeordneten Werkstücke (9) zum Absortieren nach erfolgter Herstellung, und
einer Werkstücksammelstelleneinheit (13) mit
einem Ablegebereich (41) für Werkstücke (9), die im Rahmen eines Bearbeitungsplans (16) von der Werkzeugmaschine erzeugt wurden,
einer Anzeigeeinheit (43), die dazu ausgebildet ist, Werkstückinformation über die auf dem Ablegebereich (41) abgelegten weiterzuverarbeitenden Werkstücke (9) für einen Bediener (11) anzuzeigen, und
einer Signalvorrichtung (47), die dazu ausgebildet ist, ein Identifikationssignal auszugeben, das einem Bediener (11) den Ort der ausgewählten Werkstücksammelstelleneinheit (13) zum Ablegen des weiterzuverarbeitenden Werkstücks (9) anzeigt.

11. Flachbettwerkzeugmaschine (13) nach Anspruch 10, wobei die Anzeigeeinheit (43) und/oder die Signalvorrichtung (47) der Werkstücksammelstelleneinheit (13) dazu ausgebildet sind, mit sich mit der Steuerungseinheit (8) der Werkzeugmaschine zum Datenaustausch zu verbinden, um Information, insbesondere über die abgelegten Werkstücke (9), zu empfangen und für einen Bediener (11) auszugeben.

12. Flachbettwerkzeugmaschine nach Anspruch 10 oder 11, wobei die Anzeigeeinheit (43) dazu ausgebildet ist, die Werkstückinformation der Werkstücksammelstelleneinheit (13) menschenlesbar und/oder maschinenlesbar anzuzeigen, und die Werkstückinformation insbesondere Information über die Anzahl der abzulegenden Werkstücke (9), einen nachfolgenden Bearbeitungsschritt und/oder einen zugrundeliegenden Auftrag umfasst,
die Anzeigeeinheit (43) der Werkstücksammelstelleneinheit (13) eine E-Ink-Anzeige ist und/oder
die Anzeigeeinheit (43) der Werkstücksammelstelleneinheit (13) eine Einheit mit der Signalvorrichtung (47) ausbildet.

13. Flachbettwerkzeugmaschine nach einem der Ansprüche 10 bis 12, wobei die Signalvorrichtung zur Anzeige eines Ablegesignals in Abhängigkeit des Sortiersignals zur Unterstützung der Zuordnung des entnommenen Werkstücks (9) durch einen Bediener (11) zu einem nachfolgenden Bearbeitungsschritt, insbesondere zum Ablegen des entnommenen Werkstücks an der Werkstücksammelstelleneinheit (13), ausgebildet ist, und/oder
die Signalvorrichtung (47) eine Lichtquelle, wie eine, insbesondere hell und auffällig leuchtende, LED-basierte Lichtquelle, und optional eine akustische Signalquelle umfasst.

14. Flachbettwerkzeugmaschine nach einem der Ansprüche 10 bis 13, ferner mit
einer Erfassungseinheit (15) zum bildgebenden Erfassen des Sortiertischs (21) mit einer Mehrzahl von räumlich nebeneinander angeordneten Werkstücken (9) und Erzeugen von mindestens einem ersten Absortierbilddatensatz (27) zu einem ersten Zeitpunkt und einem zweiten Absortierbilddatensatz (29) zu einem zweiten nachfolgenden Zeitpunkt.

15. Kommunikationssystem einer Flachbettwerkzeugmaschinen-Installation zur Ausbildung einer intelligenten Fabrik (1) mit
mindestens einer Flachbettwerkzeugmaschine (3) nach einem der Ansprüche 10 bis 14 mit einer Steuerungseinheit (8) zur Ansteuerung einer Werkstückerzeugung gemäß vorgegebenen Bearbeitungsplänen (16),
einem Manufacturing Execution System (5), in das die Steuerungseinheit (8) eingebunden ist und das Auftragsinformation bzgl. der Bearbeitungspläne (16) verwaltet, wobei die Auftragsinformation Werkstückinformation umfasst, und
einer Mehrzahl von
kombinierten Signal-/Anzeigeeinheiten (44), die jeweils eine Anzeigeeinheit (43) und eine Signalabgabevorrichtung (47) aufweisen, wobei die Anzeigeeinheit (43) dazu ausgebildet ist, die Werkstückinformation über ein oder mehrere der kombinierte Signal-/Anzeigeeinheit zugeordnete Werkstücke für einen Bediener anzuzeigen, und die Signalabgabevorrichtung dazu ausgebildet ist, ein Identifikationssignal auszugeben, das einem Bediener den Ort der kombinierten Signal-/Anzeigeeinheit anzeigt, und/oder
Werkstücksammelstelleneinheiten (13) jeweils mit einem Ablegebereich (41) für Werkstücke (9), die im Rahmen eines Bearbeitungsplans (16) von der Werkzeugmaschine erzeugt wurden, einer Signalvorrichtung (47), die dazu ausgebildet ist, ein Identifikationssignal auszugeben, das einem Bediener (11) den Ort der ausgewählten Werkstücksammelstelleneinheit (13) zum Ablegen des weiterzuverarbeitenden Werkstücks (9) anzeigt, und einer Anzeigeeinheit (43), die dazu ausgebildet ist, Werkstückinformation über die auf dem Ablegebereich (41) abgelegten weiterzuverarbeitenden Werkstücke (9) für einen Bediener (11) anzuzeigen.

## Claims

1. A method for performing a sequence of processing steps for processing workpieces (9), which were produced with a flatbed machine tool, in particular a laser cutting or punching flatbed machine tool (3), in accordance with a processing plan (16) including exact shapes and relative positions of the produced workpieces in relation to each other, wherein the workpieces are arranged on a sorting table as well as providing (step 51) a processing image data set (16') of the processing plan, wherein the arrangement of the workpieces (9) was based on the processing image data set (16') of the processing plan (16), wherein workpiece collecting point units (13) are used for collecting workpieces (9) and at least one of the workpiece collecting point units (13) includes a signal device (47) and a display unit (43), the method comprising the steps in the sequence:
recognizing which produced workpiece was taken from the sorting table by comparing (step 81) the processing image data set (16') of the processing plan with a sorting image data set (27, 29), which was generated with an imaging-based detection of the workpiece (9), wherein a sorting signal is generated (step 83) including information about a workpiece (9) to be further processed;
selecting (step 85) one of the workpiece collecting point units (13) associated with the sorting signal;
driving (step 87) the signal device (47) of the selected workpiece collecting point unit (13) to output an identification signal indicating to an operator (11) the location of the selected workpiece collecting point unit (13) for placing the workpiece (9) to be further processed;
transmitting (step 89) workpiece information resulting from the sorting signal about the workpiece (9) to be further processed to the selected workpiece collecting point unit (13); and
displaying (step 91) the workpiece information on the display unit (43) of the selected workpiece collecting point unit (13).

2. The method of claim 1, further comprising:
outputting the identification signal by the signal device (47) in response to a localizing request to the selected workpiece collecting point unit (13) (step 88A) and/or upon activation of a near field sensor (step 88B); and
wherein the signal device (47) is optionally controlled for outputting an optical identification signal, in particular a flashing identification signal, and/or an acoustic identification signal so that the attention of an operator is directed to the workpiece collecting point unit (13).

3. The method of claim 1 or 2, further comprising:
requesting the workpiece information related to a sorting signal from a control unit (8) of the machine tool by the selected workpiece collecting point unit (13); and
displaying the received workpiece information with the display unit (43) of the selected workpiece collecting point unit (13), in particular in a human-readable and/or machine-readable manner.

4. The method of any one of the preceding claims, further comprising:
detecting (step 93A) a number of workpieces placed at the workpiece collecting point unit (13);
comparing (step 93B) the number with a target number provided in particular as part of the workpiece information of the workpiece collecting point unit (13); and
outputting the identification signal by the signal device (47) when the target number is reached and/or outputting information relating to the next processing step, which information has in particular been provided as part of the workpiece information of the workpiece collecting point unit (13).

5. The method of claim 4, wherein the detection of the number of workpieces placed at the workpiece collecting point unit (13) is performed based on the imaging based detection of a sorting table (21) of the machine tool, in particular on a monitoring of a placing operation of a removed workpiece (9) carried out by an operator (11), and/or by weight monitoring of the workpiece collecting point unit (13).

6. The method of any one of the preceding claims, further comprising:
driving the signal device (47) of the selected workpiece collecting point unit (13) to output a sorting operation completion signal when it is detected that a workpiece placing operation has been performed correctly (step 97); and optionally
updating the display unit (43) of the selected workpiece collecting point unit (13) with respect to the displayed number of workpieces (9).

7. The method of any one of the preceding claims, further comprising:
driving the signal device (47) of the selected workpiece collecting point unit (13) to output an error signal when the workpiece placing operation has not been performed at the workpiece collecting point unit (13).

8. The method of any one of the preceding claims, further comprising:
comparing location information of the workpiece collecting point unit (13) and location information of a sorted workpiece (9), in particular of a hand moving the workpiece, wherein the workpiece is booked to the workpiece collecting point unit (13) for a positive comparison.

9. The method of claim 8, wherein the comparison of the location information is carried out by the workpiece collecting point unit (13) and/or a higher-level control system of the machine tool.

10. A flatbed machine tool, in particular a laser cutting or a punching flatbed machine tool (3), comprising:
a processing unit, in particular a laser cutting processing unit or a punching processing unit;
a control unit (8), in which a processing plan (16) is stored, for controlling the processing unit to generate workpieces (9), which are arranged next to one another spatially in accordance with a processing image data set (16'), wherein the control unit (8) is configured for performing the method according to any one of claims 1 to 9;
a sorting table (21) for providing the arranged workpieces (9) for sorting after generation; and
a workpiece collecting point unit (13) comprising:
a placing region (41) for workpieces (9), which were generated by the machine tool within a framework of a processing plan (16);
a display unit (43) adapted to display workpiece information to an operator (11) about the workpieces (9) to be further processed, which were placed on the placing area (41); and
a signal device (47) adapted to output an identification signal indicating to an operator (11) the location of the selected workpiece collecting unit (13) for placing the workpiece (9) to be further processed.

11. The flatbed machine tool (13) of claim 10, wherein the display unit (43) and/or the signal device (47) of the workpiece collecting point unit (13) are adapted to connect to the control unit (8) of the machine tool for data exchange in order to receive information, in particular about the placed workpieces (9), and to output the information to an operator (11).

12. The flatbed machine tool of claim 10 or 11, wherein the display unit (43) is adapted to display the workpiece information of the workpiece collecting point unit (13) in a human-readable and/or machine-readable manner, and the workpiece information includes in particular information about the number of workpieces (9) to be placed, a subsequent processing step, and/or an underlying order,
the display unit (43) of the workpiece collecting point unit (13) is an E-Ink display, and/or
the display unit (43) of the workpiece collecting point unit (13) forms a unit with the signal device (47).

13. The flatbed machine tool according to any one of claims 10 to 12, wherein the signal device is adapted to display a placing signal as a function of the sorting signal for supporting the association of the removed workpiece (9) by an operator (11) to a subsequent processing step, in particular for placing the removed workpiece at the workpiece collecting point unit (13), and/or
the signal device (47) includes a light source such as an LED-based light source, in particular a bright and showy light source, and optionally an acoustic signal source.

14. The flatbed machine tool of any one of claims 10 to 13 further comprising:
a detection unit (15) for imaging the sorting table (21) with a plurality of workpieces (9) arranged spatially next to one another and for generating at least one first sorting image data set (27) at a first point in time and a second sorting image data set (29) at a second subsequent point in time.

15. A communication system of a flatbed machine tool installation for forming an intelligent factory (1) comprising:
at least one flatbed machine tool (3) having a control unit (8) for controlling workpiece production in accordance with predetermined processing plans (16) according to any one of claims 10 to 14;
a manufacturing execution system (5), with which the control unit (8) is linked and which manages order information relating to the processing plans (16), the order information comprising workpiece information; and
a plurality of
combined signal/display units (44) each comprising a display unit (43) and a signal output device (47), the display unit (43) being adapted to display to an operator the workpiece information of one or more workpieces associated with the combined signal/display unit, and the signal output device being adapted to output an identification signal indicating to an operator the location of the combined signal/display unit; and/or
workpiece collecting point units (13) respectively having a placing region (41) for workpieces (9), which were generated by the machine tool within a framework of a processing plan (16); a display unit (43), a signal device (47) adapted to output an identification signal indicating to an operator (11) the location of the selected workpiece collecting unit (13) for placing the workpiece (9) to be further processed, and a display unit (43) adapted to display workpiece information to an operator (11) about the workpieces (9) to be further processed, which were placed on the placing area (41).

## Revendications

1. Procédé pour l'exécution d'une séquence d'étapes de traitement pour le traitement de pièces usinées (9) fabriquées à l'aide d'une machine-outil à banc plat, en particulier une machine-outil à banc plat de découpage ou de poinçonnage (3) selon un plan de traitement (16) contenant des formes exactes et des positions relatives des pièces usinées fabriquées les unes par rapport aux autres, et dans lequel les pièces usinées sont disposées sur une table de tri, et pour la mise à disposition (étape 51) d'un ensemble de données d'image de traitement (16') du plan de traitement (16), dans lequel l'agencement des pièces usinées (9) se base sur un ensemble de données d'image de traitement (16') du plan de traitement (16), dans lequel des unités de point de collecte de pièces usinées (13) sont utilisées pour la collecte de pièces usinées (9) et l'une au moins des unités de point de collecte de pièces usinées (13) présente un dispositif de signal (47) et une unité d'affichage (43), comprenant les étapes suivantes dans l'ordre ci-dessous :
détection de la pièce usinée retirée de la table de tri, par recoupement (étape 81) de l'ensemble de données d'image de traitement (16') du plan de traitement (16) avec un ensemble de données d'image de tri (27, 29) constitué en détectant des pièces usinées (9) par imagerie, où un signal de tri comportant des informations relatives à une pièce usinée (9) à traiter ultérieurement est produit (étape 83),
sélection (étape 85) de l'une des unités de point de collecte de pièces usinées (13), attribuée au signal de tri,
actionnement (étape 87) du dispositif de signal (47) de l'unité de point de collecte de pièces usinées (13) sélectionnée pour l'émission d'un signal d'identification indiquant à un opérateur (11) l'emplacement des unités de point de collecte de pièces usinées (13) sélectionnées pour le dépôt de la pièce usinée (9) à traiter ultérieurement,
transmission (étape 89) d'une information de pièce usinée découlant du signal de tri, concernant la pièce usinée (9) à traiter ultérieurement, à l'unité de point de collecte de pièces usinées (13) sélectionnée, et
affichage (étape 91) de l'information de pièce usinée sur l'unité d'affichage (43) de l'unité de point de collecte de pièces usinées (13) sélectionnée.

2. Procédé selon la revendication 1, comprenant en outre :
l'émission du signal d'identification par le dispositif de signal (47) lors d'une demande de localisation adressée à l'unité de point de collecte de pièces usinées (13) sélectionnée (étape 88A) et/ou lors de l'activation d'un capteur de champ proche (étape 88B) et
dans lequel le dispositif de signal (47) est actionné facultativement pour l'émission d'un signal d'identification optique, en particulier clignotant et/ou acoustique, de manière à attirer l'attention d'un opérateur vers l'unité de point de collecte de pièces usinées (13).

3. Procédé selon la revendication 1 ou 2, comprenant en outre :
demande de l'information de pièce usinée correspondant à un signal de tri d'une unité de commande (8) de la machine-outil par l'unité de point de collecte de pièces usinées (13) sélectionnée, et
affichage de l'information de pièce usinée reçue à l'aide de l'unité d'affichage (43) de l'unité de point de collecte de pièces usinées (13) sélectionnée, en particulier de manière lisible par l'homme ou lisible par machine.

4. Procédé selon l'une des revendications précédentes, comprenant en outre :
la détection (étape 93A) d'un nombre de pièces usinées déposées dans l'unité de point de collecte de pièces usinées (13),
le recoupement (étape 93B) du nombre avec un nombre théorique, lequel a été en particulier mis à disposition comme une partie de l'information de pièce usinée de l'unité de point de collecte de pièces usinées (13), et
l'émission du signal d'identification par le dispositif de signal (47) lors de l'atteinte du nombre théorique et/ou l'émission d'une information concernant l'étape de traitement suivante, laquelle a été en particulier mise à disposition comme une partie de l'information de pièce usinée de l'unité de point de collecte de pièces usinées (13).

5. Procédé selon la revendication 4, dans lequel la détection du nombre de pièces usinées déposées dans l'unité de point de collecte de pièces usinées (13) est effectuée sur la base la détection par imagerie d'une table de tri (21) de la machine-outil, en particulier sur la base d'une surveillance d'une opération de dépôt d'une pièce usinée (9) retirée, réalisée par un opérateur (11), et/ou au moyen d'une surveillance de poids de l'unité de point de collecte de pièces usinées (13) .

6. Procédé selon l'une des revendications précédentes, comprenant en outre :
l'actionnement du dispositif de signal (47) de l'unité de point de collecte de pièces usinées (13) sélectionnée, pour l'émission d'un signal de fin d'opération de tri, lorsqu'il est détecté qu'une opération de dépôt de pièce usinée a été exécutée correctement (étape 97), et facultativement
la mise à jour de l'unité d'affichage (43) de l'unité de point de collecte de pièces usinées (13) sélectionnée ou du nombre affiché de pièces usinées (9).

7. Procédé selon l'une des revendications précédentes, comprenant en outre
l'actionnement du dispositif de signal (47) de l'unité de point de collecte de pièces usinées (13) sélectionnée pour l'émission d'un signal d'erreur, lorsque l'opération de dépôt de pièce usinée n'a pas été exécutée dans l'unité de point de collecte de pièces usinées (13).

8. Procédé selon l'une des revendications précédentes, comprenant en outre :
le recoupement d'une information de localisation de l'unité de point de collecte de pièces usinées (13) avec une information de localisation d'une pièce usinée (9) triée, en particulier d'une main déplaçant la pièce usinée, dans lequel la pièce usinée est réservée à l'unité de point de collecte de pièces usinées (13) lors d'un recoupement positif des informations de localisation.

9. Procédé selon la revendication 8, dans lequel le recoupement des informations de localisation est effectué par l'unité de point de collecte de pièces usinées (13) et/ou par un système de commande maître de la machine-outil.

10. Machine-outil à banc plat, en particulier une machine-outil à banc plat de découpage au laser ou de poinçonnage (3), comprenant :
une unité de traitement, en particulier une unité de traitement par découpage au laser ou par poinçonnage,
une unité de commande (8) dans laquelle est enregistré un plan de traitement (16) pour l'actionnement de l'unité de traitement pour la production de pièces usinées (9) disposées spatialement côte à côte selon un ensemble de données d'image de traitement (16'), l'unité de commande (8) étant conçue pour la mise en œuvre du procédé selon l'une des revendications 1 à 9,
une table de tri (21) pour la mise à disposition des pièces usinées (9) disposées pour le tri après leur fabrication, et
une unité de point de collecte de pièces usinées (13) comprenant
une région de dépôt (41) pour des pièces usinées (9) produites par la machine-outil dans le cadre du plan de traitement (16),
une unité d'affichage (43) conçue pour afficher, pour un opérateur (11), une information de pièces usinées concernant les pièces usinées (9) à traiter ultérieurement déposées dans la région de dépôt (41), et
un dispositif de signal (47) conçu pour émettre un signal d'identification indiquant à un opérateur (11) l'emplacement de l'unité de point de collecte de pièces usinées (13) sélectionnée pour le dépôt de la pièces usinées (9) à traiter ultérieurement.

11. Machine-outil à banc plat (13) selon la revendication 10, dans laquelle l'unité d'affichage (43) et/ou le dispositif de signal (47) de l'unité de point de collecte de pièces usinées (13) sont conçus pour relier l'unité de commande (8) de la machine-outil en vue d'un échange de données, afin de recevoir des informations, en particulier concernant les pièces usinées (9) déposées, et de les transmettre à un opérateur (11).

12. Machine-outil à banc plat selon la revendication 10 ou 11, dans laquelle l'unité d'affichage (43) est conçue pour afficher les informations de pièces usinées de l'unité de point de collecte de pièces usinées (13) de manière lisible par l'homme et/ou lisible par machine, et l'information de pièce usinée comporte en particulier une information concernant le nombre des pièces usinées (9) à déposer, une étape de traitement consécutive et/ou une tâche sous-jacente,
l'unité d'affichage (43) de l'unité de point de collecte de pièces usinées (13) est un affichage E-ink et/ou
l'unité d'affichage (43) de l'unité de point de collecte de pièces usinées (13) forme une unité avec le dispositif de signal (47).

13. Machine-outil à banc plat selon l'une des revendications 10 à 12, dans laquelle le dispositif de signal est conçu pour afficher un signal de dépôt en fonction du signal de tri pour faciliter l'attribution de la pièce usinée (9) retirée, par un opérateur (11), à une étape de traitement consécutive, en particulier pour le dépôt de la pièce usinée retirée dans l'unité de point de collecte de pièces usinées (13), et/ou
le dispositif de signal (47) comporte une source de lumière, telle qu'une source de lumière DEL, en particulier avec un éclairage vif et bien visible, et facultativement une source de signal acoustique.

14. Machine-outil à banc plat selon l'une des revendications 10 à 13, comprenant en outre :
une unité de détection (15) pour la détection par imagerie de la table de tri (21) avec une pluralité de pièces usinées (9) disposées spatialement les unes à côté des autres et pour la production d'au moins un premier ensemble de données d'image de tri (27) à un premier moment et d'un deuxième ensemble de données d'image de tri (29) à un deuxième instant consécutif.

15. Système de communication d'une installation de machine-outil à banc plat pour la création d'une usine intelligente (1), comprenant :
au moins une machine-outil à banc plat (3) selon l'une des revendications 10 à 14, avec une unité de commande (8) destinée à commander une fabrication de pièces usinées selon des plans de traitement (16) prédéfinis,
un système d'exécution de production (5), dans lequel l'unité de commande (8) est intégrée et lequel gère des informations de tâche relatives aux plans de traitement (16), les informations de tâche comportant des informations de pièces usinées, et
une pluralité d'unités de signal/d'affichage combinées (44), lesquelles présentent respectivement une unité d'affichage (43) et un dispositif de délivrance de signaux (47), l'unité d'affichage (43) étant conçue pour fournir à un opérateur les informations de pièces usinées concernant une ou plusieurs pièces usinées attribuées à l'unité de signal/d'affichage combinée, et le dispositif de délivrance de signaux étant conçu pour délivrer un signal d'identification indiquant à un opérateur l'emplacement de l'unité de signal/d'affichage combinée, et/ou
des unités de point de collecte de pièces usinées (13) comprenant respectivement une région de dépôt (41) pour des pièces usinées (9), lesquelles ont été fabriquées dans le cadre d'un plan de traitement (16) par la machine-outil, un dispositif de signal (47) conçu pour émettre un signal d'identification indiquant à un opérateur (11) l'emplacement des unités de point de collecte de pièces usinées (13) sélectionnées pour le dépôt de la pièce usinée (9) à traiter ultérieurement, et une unité d'affichage (43) conçue pour fournir à un opérateur (11) les informations de pièces usinées concernant les pièces usinées (9) à traiter ultérieurement déposées dans une région de dépôt (41).
